# EUROPEAN PATENT APPLICATION

(11) **EP 3 560 587 A1**
(43) Date of publication of application: **30.10.2019**
(21) Application number: 18169069.4
(22) Date of filing: 24.04.2018
(51) Int. Cl.: B01J 20/22, B01J 20/30

(54) **METHOD FOR SYNTHESIS OF A METAL ORGANIC FRAMEWORK COMPOSITE**

(71) Applicant: Ecole Polytechnique Fédérale de Lausanne (EPFL), 1015 Lausanne (CH)
(72) Inventor: QUEEN, Wendy Lee, 1971 Champlan (CH); YANG, Shuliang, 1950 Sion (CH); PENG, Li, 1950 Sion (CH); SUN, Daniel Teav, 1950 Sion (CH)
(74) Representative: Micheli & Cie SA

(57) **Abstract**

The present invention relates to a method for synthesis of a metal organic framework composite comprising the following steps:
a) Synthesize a metal organic framework;
b) Make a polymer grow on said metal organic framework, said polymer being chosen among polymers having
i. at least a Lewis Base functionality which allows said polymer to bind to the metal organic framework surface, and
ii. at least another functionality that promotes electron donation, electron acceptance, Bronsted acidity or Bronsted basiscity, which allows one to carry out the following step c).

c) Functionalize the surface of the product obtained in step b) by a chemical reaction between said polymer and a hydrophobic compound.

The present invention also concerns a metal organic framework composite obtainable by such a method and the use of such a metal organic framework composite for catalysis, selective gas separation, drug delivery or separation of harmful contaminates such as metals and organic compounds from water.

## Description

The invention concerns a method for the synthesis of a metal organic framework composite (MOF), a MOF composite thus synthesized, and the use of said composite for various applications.

MOFs are a relatively new class of microporous materials constructed by metal-ions or metal-ions clusters interlinked by organic ligands. They have received tremendous attention due to unprecedented internal surface areas, tunable topologies, designable pore surfaces, and their applicability in a number of energy related areas including catalysis, gas adsorption/separation, energy storage/conversion and so on.

However, their weak coordination bonding can limit the stability of some MOFs in water, particularly at extreme pH.

To overcome this instability issue and expand the practical applications of MOFs, two main methods have recently been developed.

A first method is to functionalize the organic linkers of unstable MOFs with hydrophobic functionality. For example, as explained in the publications *"*J. G. Nguyen, S. M. Cohen, J Am Chem Soc 2010, 132, 4560-4561*";* and "Z. Wang, S. M. Cohen, Chem Soc Rev 2009, 38, 1315*",* Cohen et al introduced hydrophobic alkyl groups such as isopropyl, isobutyl, and linear alkyl chains, onto MOF ligands.

A second method consists in introducing hydrophobic layers post synthetically onto the external MOF surface. For example, as mentioned in the publication *"*W. Zhang, Y. Hu, J. Ge, H.-L. Jiang, S.-H. Yu, J Am Chem Soc 2014, 136, 16978-16981*",* Yu et al reported a hydrophobic polydimethysiloxane (PDMS) coating process, achieved by heating MOFs in the presence of a PDMS stamp in a sealed glass container at 235 °C. Further, Park et al used calcination to construct hydrophobic surfaces, as explained in the article "S. J. Yang, C. R. Park, Adv Mater 2012, 24, 4010-4013*".*

These reported methods are proven to be effective, but they are also complicated. Moreover, to date, none of these methods have been applied to large numbers of structurally diverse frameworks.

The object of the invention is to provide a simple method for improving the stability of MOFs in aqueous media and/or at varying pH that can be applied to large numbers of structurally diverse frameworks.

Another object of the invention is to improve MOF performance in existing applications and to open doors to new applications.

The high demand for offshore oil production frequently leads to frequent oil-spills. Moreover, the extensive usage of organic compounds in various industries often allows their accidental release into the environment. Both of these can cause long-term damage to the environment especially to marine ecosystems. As such, materials able to promote oil/water separations or the separation of other harmful organics from water are becoming increasingly important. It is also an object of the invention to provide such materials.

For these purposes, the invention provides a method for synthesis of a metal organic framework composite comprising the following steps:
a) Synthesize a metal organic framework;
b) Make a polymer grow on said metal organic framework, said polymer being chosen among polymers having
   i. at least a Lewis Base functionality which allows said polymer to bind to the metal organic framework surface, and
   ii. at least another functionality that promotes electron donation, electron acceptance, Bronsted acidity or Bronsted basiscity, which allows one to carry out the following step c).
c) Functionalize the surface of the product obtained in step b) by a chemical reaction between said polymer and a hydrophobic compound.

The composite obtained in step c) has an enhanced hydrophobicity compared to the metal organic framework synthesized in step a), and hence increased stability with regard to water and/or extreme pH.

Step c) is typically a Michael addition, a Schiff base reaction, an acid-base neutralization reaction, or an alcoholysis reaction, preferably a Michael addition. Said step c) is typically conducted in the presence of a base to catalyze the Michael addition reaction, typically in the presence of triethylamine.

The Lewis Base functionality of the polymer mentioned in step b) of the method according to the invention typically comprises -OH, -NH₂, -COOH, or-SH. Moreover, the at least another functionality of said polymer typically comprises-OH, -SH, -NO₂, -NH₂, -NHR₁, -COOH, -COOR₁, -C≡N, -C=O, -C=C-, -C=N-, or -C=S, preferably -C=O, -C=C-, -C=N-, -NH₂, or -OH, with R₁ being chosen among alkyl, alkenyl, alkynyl and phenyl groups.

Advantageously, the polymer according to the invention could be constructed from monomers that contain phenyl rings. Preferably, said polymer could be constructed from one or more of the following monomers: 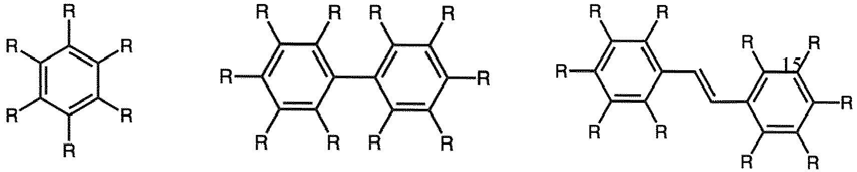 where each R group can be chosen among the following: -H, -CH₃, -NH₂, - R₁NH₂, -NO₂, -R₁NO₂, -N(R₁)₂ -OH, -F, -Cl, -Br, -I, -CF₃, -R₁, -SH, -C≡CR₁, -C≡N, - NCO, -NCS, -OCN, -CH=R₁, -COH, -COCI, -COOH, -COR₁, -NHR₁, -R₁NHR₁, -C=NH, -COOR₁, -R₁NH₂COOH, -OR₁, -R₁NH₂COOCH₃ or derivatives thereof, preferably, one or more of said R groups are chosen among the following: -NH₂, - OH, -COOH, -SH, R₁ being chosen among alkyl, alkenyl, alkynyl and phenyl groups.

Even more preferably, said polymer could be constructed from one or more of the following monomers:

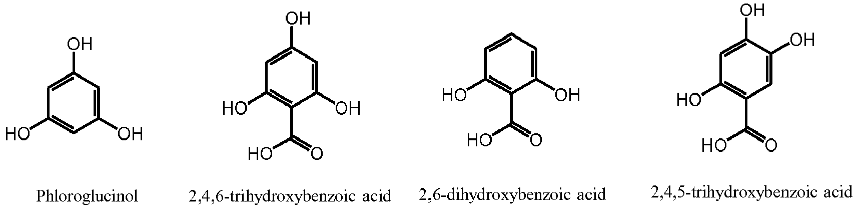

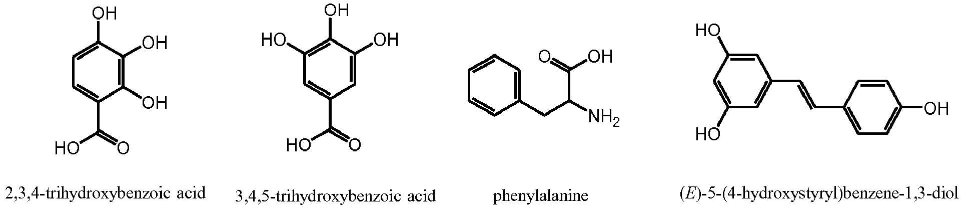

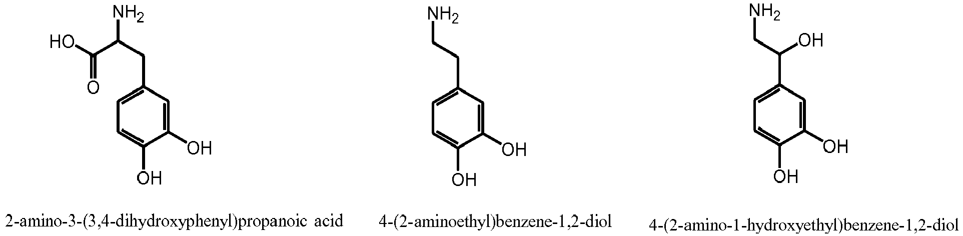

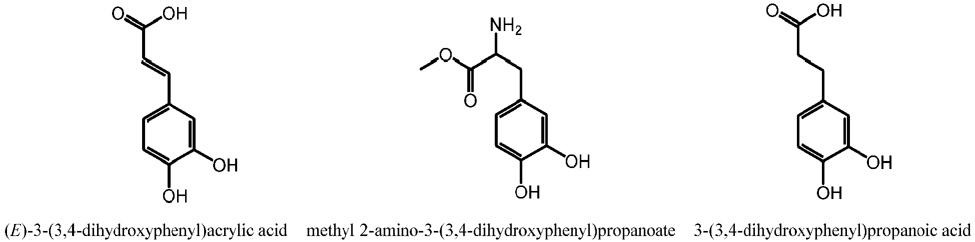

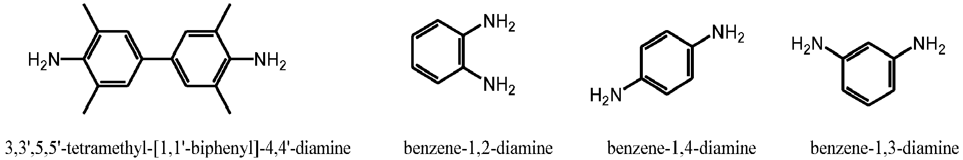

Said polymer can also be a catechol. It could typically be constructed from monomers such as naturrally occuring biomolecules like catechins such as the following molecules:

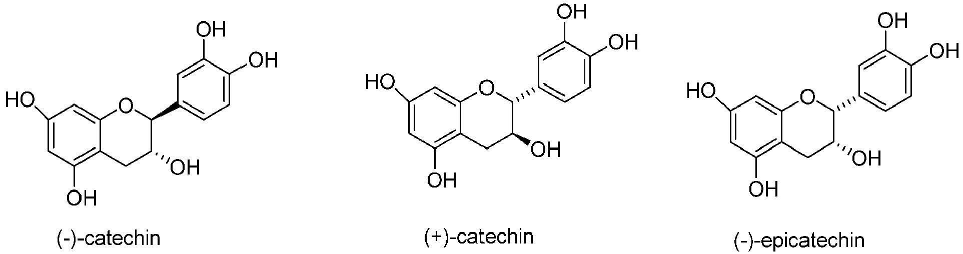

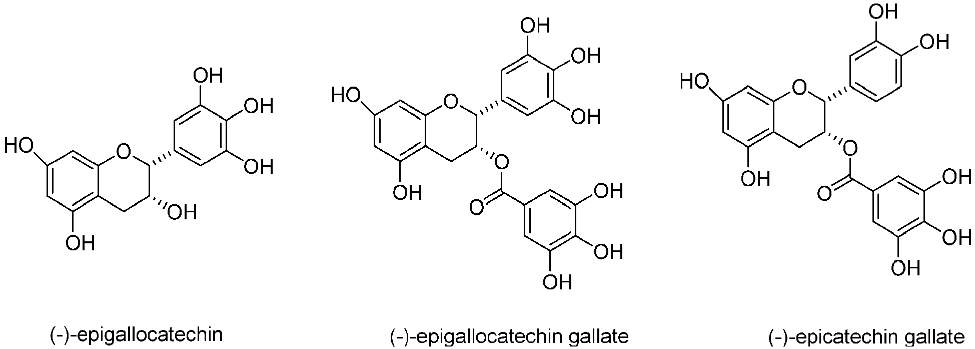

In a prefered embodiment, the polymer is polydopamine (PDA).

PDA has both catechol and amine/imino functionalities. These functionalities enable it to mimic the adhesive properties of mussel foot proteins. Dopamine can attach to a very wide number of material surfaces, even those with super hydrophobic surfaces, therefore PDA could adhere to both hydrophilic and hydrophobic MOFs and is prone to attach to large numbers of structurally diverse frameworks.

Preferably, PDA is obtained from free base dopamine. Free base dopamine is preferred to dopamine hydrochloride for example as it does not need a pH swing to basic conditions for polymerization. It polymerizes under a mild oxygen atmosphere and does not need basic aqueous environments. On the contrary, dopamine hydrochloride needs basic aqueous environments (for example pH 8.5 aqueous solution) to polymerize. While it can be used, it is not compatible with the modification of MOFs that are highly moisture or pH sensitive.

According to the invention, the hydrophobic compound is chosen among hydrophobic molecules which have alkyl and/or fluorinated groups and include at least one other functionality.

Typically, said hydrophobic molecules comprise: 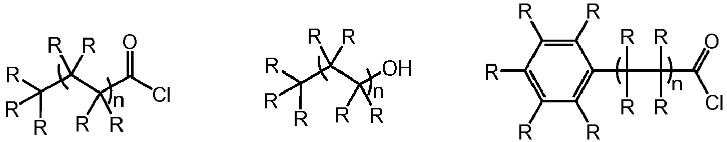 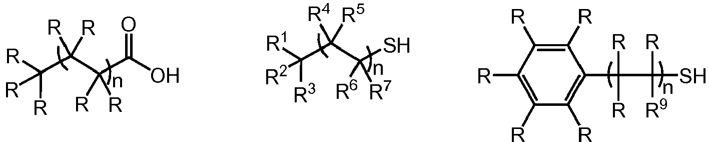 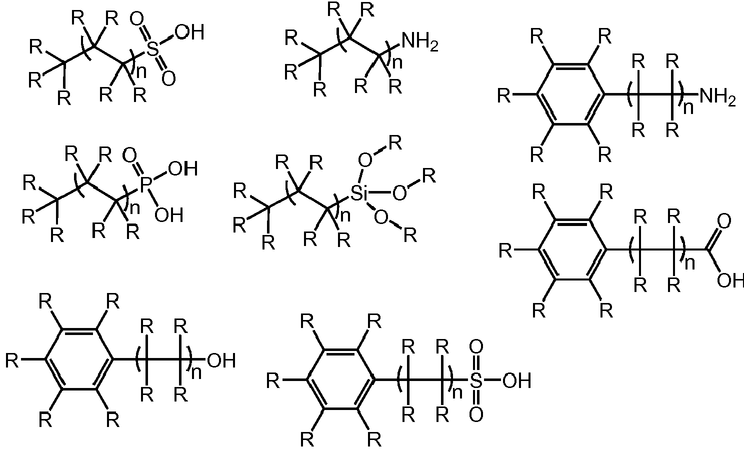 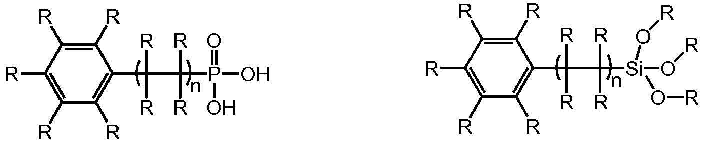 where each R is chosen among -H, -F, -CF₃, -OCF₃, -NO₂, -R₁NO₂, -OH, -R₁OH, -SH, -R₁SH, -COOH, -R₁COOH, -COH, -R₁COH, -R₁COOR₁, -COCI, -R₁COCl, -NH₂, -R₁NH₂, -SO₂H, -R₁SO₂H, -SO₂Cl, -R₁SO₂Cl, -SO₂F, -R₁SO₂F, -SO₃H, - R₁SO₃H, -PO₄H₂, -R₁PO₄H₂, -SO₂NH₂, -R₁SO₂NH₂, -SO₂NHR₁, - SO₂NHR₁COOH, -PO₃H₂, -R₁PO₃H₂, CH=CH(R₁), -OR₁OH, -Si(OR₁)₃ and combinations thereof, where n is an integer ≥ 0, and where R₁ is chosen among alkyl, alkenyl, alkynyl and phenyl groups.

Said hydrophobic molecules can also comprise alkanes or fluoroalkanes and said at least one other functionality can be chosen among -COOH, -OH, -SH, - SO₃H, -PO₃H₂, and/or -NH₂ functionalities, even more preferably-SH.

Advantageously, said hydrophobic compound is chosen among the following molecules: 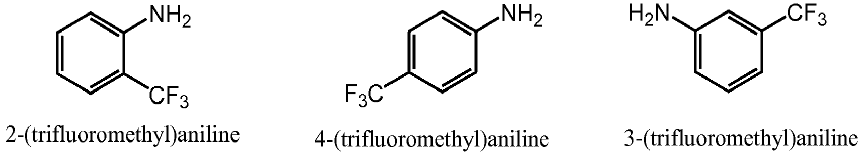 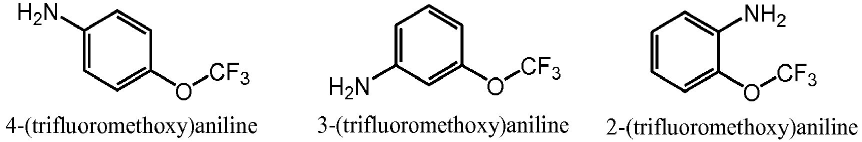 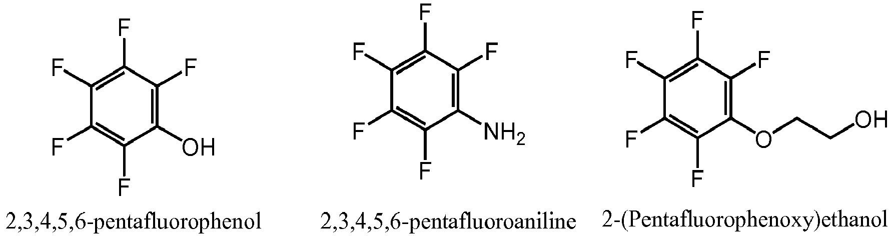 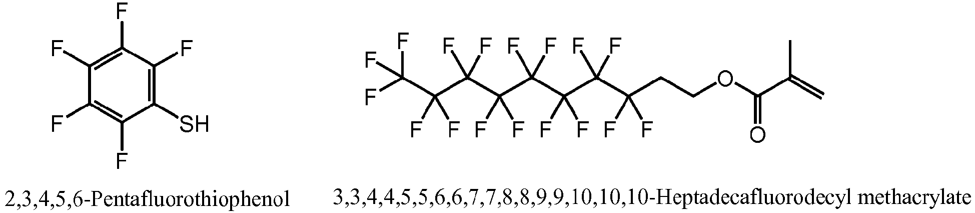 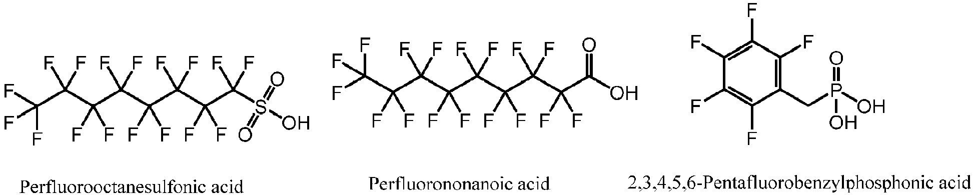 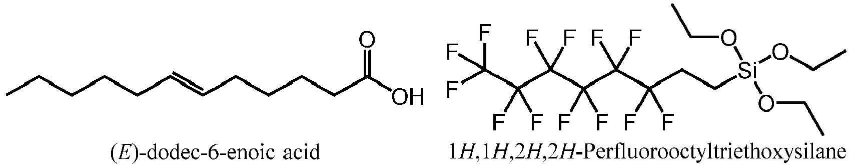 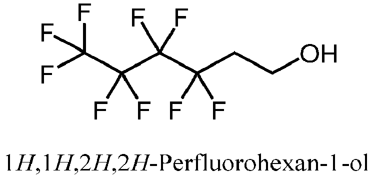 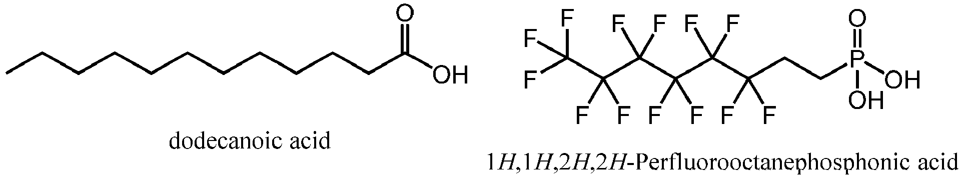 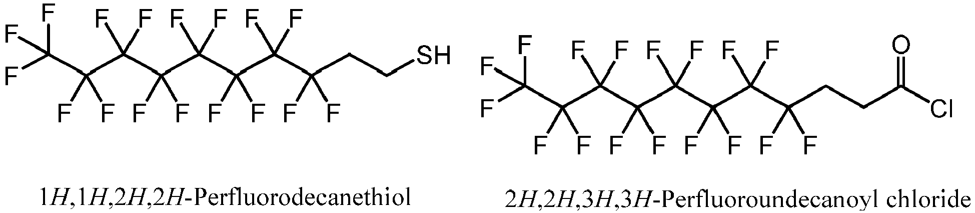 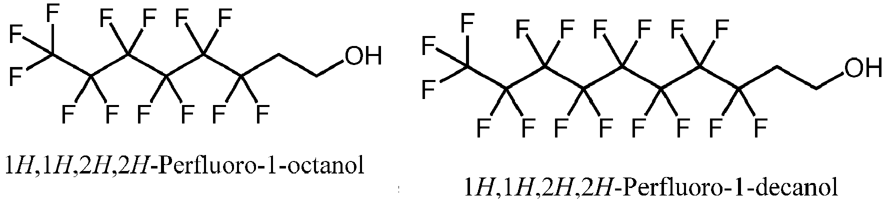 It is preferably 1H, 1H, 2H, 2H-perfluorodecanethiol (HSF).

The framework according to the invention is typically chosen among HKUST-1 (Cu₃(BTC)₂, BTC³⁻= benzene-1,3,5-tricarboxylate), ZIF-8 (Zn(Mlm)₂, Mlm=2-methylimidazolate), ZIF-67 (Co(Mlm)₂, Mlm=2-methylimidazolate), ZIF-69 (Zn(cblm)(nlm), cblm= 5-chlorobenzimidazole, nlm=2-nitroimidazole), Mg-MOF-74 (Mg₂(dobdc), dobdc⁴⁻ = 2,5-dioxido-1,4-benzenedicarboxylate), UiO-66 (Zr₆O₄(OH)₄(BDC)₆, BDC²⁻= 1,4-dicarboxybenzene), MIL-100-Fe (or Fe₃(BTC)₂, BTC³⁻= benzene-1,3,5-tricarboxylate), Cu-TDPAT (TDPAT=2,4,6-tris(3,5-dicarboxylphenylamino)-1,3,5-triazine), or any chemical derivative of the aforementioned frameworks.

More preferably, the metal organic framework according to the invention is HKUST-1.

In the method according to the invention the polymer is advantageously grown in majority outside the pores of the metal organic framework.

In the method according to the invention, step b) typically comprises the following steps:
i. Disperse the metal organic framework in a polar solvent;
ii. Add the appropriate monomers to the solution and stir in the presence of an oxidizing agent in order to make said polymer grow on said metal organic framework ; and
iii. separate the obtained solid product from the solution.

Concerning, step c), it typically comprises the following steps:
i. Disperse the product obtained from step b) in a solvent;
ii. Add said hydrophobic compound and stir, if necessary in the presence of an appropriate acid or base; and
iii. Recover the obtained composite and wash it with a solvent.

Preferably, step (c)(ii) comprises:
- the addition of a hydrophobic compound chosen among hydrophobic molecules that contain strong Bronsted acid functionality such as - COOH, -SO₃H, -PO₃H₂, -PO₄H₂, -R₁COOH, -R₁SO₃H, -R₁PO₃H₂ and -R₁PO₄H₂, where R₁ is chosen among alkyl, alkenyl, alkynyl and phenyl groups, said hydrophobic molecules including for example perfluorooctanesulfonic acid (PFOS), n-octadecylphosphonic acid (OPA) and perfluorononanoic acid, and stirring ; or
- the addition of a hydrophobic compound chosen among hydrophobic molecules including any of the following functional groups : -CF₃, - OCF₃, -NO₂, -R₁NO₂, -OH, -R₁OH, -SH, -R₁SH, -COOH, - R₁COOH, -COH, -R₁COH-R₁COOR₁, -COCI, -R₁COCl, -NH₂, - R₁NH₂, -SO₂H, -R₁SO₂H, -SO₂Cl, -R₁SO₂Cl, -SO₂F, -R₁SO₂F, - SO₃H, -R₁SO₃H, -SO₂NH₂, -R₁SO₂NH₂ -SO₂NHR₁, - SO₂NHR₁COOH, -CH=CH(R₁), -OR₁OH, -Si(OR₁)₃, where R₁ is chosen among alkyl, alkenyl, alkynyl and phenyl groups, and stirring with an acid or base; or
- the addition of a hydrophobic compound chosen among hydrophobic molecules that are aniline derivatives, including for example 2,3,4,5,6-pentafluoroaniline, and stir with an acid or a base.

For the method according to the invention, the concentration of the hydrophobic compound in step c) will depend on the surface area of MOFs and should guarantee that there will be enough compounds that coat on the MOF surface.

The invention also provides a MOF composite obtainable by the previously presented method, said composite having enhanced hydrophobicity compared to the parent MOF.

Finally, the invention concerns the use of such a MOF composite for catalysis, selective gas separation, drug delivery or separation of harmful comtaminates such as metals (typically heavy metals and precious metals) and organic compounds from water, preferably for the separation of harmful organic compounds from water.

The method according to the invention uses at least a polymer, for example PDA, as an adhesive or linker in order to attach hydrophobic coating onto the surface of a MOF, preferably of a water sensitive or pH sensitive MOF. This method is able to create highly hydrophobic metal organic framework composites that are stable after soaking in water for months. It leads to a significant improvement in stability compared to the parent MOF structure, which can often decompose within minutes or hours under the same conditions.

The method according to the invention works in a number of structurally different frameworks including HKUST-1, ZIF-8, ZIF-67, ZIF-69, Mg-MOF-74, UiO-66, MIL-100-Fe and Cu-TDPAT and is thus considered to be a universal way to create highly hydrophobic metal organic frameworks.

Moreover, it has been shown that the method according to the invention improves the stability of diverse MOFs in water even in harsh conditions such as at a very acidic (pH of 1 and higher) or very basic pH (pH of 14 and lower).

Advantageously, the MOF composite according to the invention promotes the separation of other harmful organic species from water, which is of great interest.

The composites obtainable by the method according to the invention have a commune general structure. They all comprise the MOF of interest defined in step a) of the method according to the invention, said MOF being at least partially coated with the polymer added in step b), and said polymer being bounded to a functional group coming from the hydrophobic compound with which it reacts in step c).

In the following description, a metal organic framework composite according to the invention will be designated by a general expression such as HKUST-1@PDA-SF, with firstly the denomination of the MOF (HKUST-1 in this example), then "@" meaning "coated with", then the denomination of the polymer (PDA in the example) that coats said MOF, and then the group of the hydrophobic compound that is bounded to the polymer after the reaction of step c) (-SF in the example).
Figure 1 is a schematic representation of the method used to prepare hydrophobic MOF@PDA-SF composites.
Figures 2a, 2b and 2c are scanning electron microscopy (SEM) images of HKUST-1, HKUST-1@PDA and HKUST-1@PDA-SF respectively. Scale bars in figures 2a, 2b and 2c represent 2 µm.
Figures 2d, 2e and 2f are transmission electron microscopy (TEM) images of HKUST-1, HKUST-1@PDA and HKUST-1@PDA-SF respectively. Scale bars in figures 2d, 2e and 2f represent respectively 200nm, 100nm and 100nm, respectively. The insets in figures 2d, 2e and 2f (top right) are the water contact angles (CA) of the corresponding samples.
Figure 3a shows X-ray diffraction (XRD) patterns of (I) simulated HKUST-1, of (II) as-prepared HKUST-1 and of the corresponding modified samples (III) HKUST-1@PDA, (IV) HKUST-1@PDA-SF, (V) HKUST-1@PDA-SF after thirty days in water, (VI) HKUST-1@PDA-SF after water adsoption and (VII) HKUST-1@PDA-SF after 48 h in 100 °C water.
Figure 3b shows Fourier transform infrared spectra (FT-IR spectra) of the prepared HKUST-1, HKUST-1@PDA and HKUST-1@PDA-SF samples.
Figure 4 shows the high resolution XPS Cu 2p spectra of HKUST-1 and HKUST-1@PDA samples.
Figure 5 shows the energy-dispersive X-ray spectroscopy analysis (EDX) spectrum of HKUST-1@PDA-SF.
Figure 6 shows a solid-state ¹⁹F MAS NMR spectrum of HKUST-1@PDA-SF.
Figure 7a illustrates the results of N₂ adsorption-desorption isotherms of assynthesized HKUST-1 (BET surface area: 1583 m²/g), HKUST-1@PDA-SF (BET surface area: 1110 m²/g) and HKUST-1@PDA-SF (BET surface area: 1083 m²/g) after exposed to water for thirty days.
Figure 7b shows the spectra obtained from an *in situ* diffuse reflectance infrared Fourier transform spectroscopy (in situ DRIFTs) of HKUST-1@PDA-SF under varying carbon monoxide pressures.
Figure 8 shows high-angle annular dark field scanning TEM (HAADF-STEM) imaging (a,d) and corresponding EDX elemental maps(b-c,e-h).
Figure 9a is a digital photo of HKUST-1 after exposure to H₂O for one day.
Figure 9b represents the results of XRD pattern of HKUST-1 (i), HKUST-1 after exposure to H₂O for one day (ii) and the simulated HKUST-1 (iii).
Figure 9c is SEM image of the HKUST-1 after exposition to H₂O for one day. The scale bar represents 5µm.
Figure 10a shows the results of a water vapor adsorption and desorption at 298 K for HKUST-1 and for HKUST-1@PDA-SF for both a first and a second run.
Figure 10b shows XRD patterns of HKUST-1@PDA-SF and of HKUST-1@PDA-SF after exposure to a H₂SO₄ aqueous solution (pH = 2) for 24h or to a NaOH aqueous solution (pH = 12) for 24h.
Figure 11 shows XRD patterns of HKUST-1@PDA-SF after an oil/water separation experiment.
Figures 12a and 12b show SEM images respectively of ZIF-67 nanocubes and of modified ZIF-67@PDA-SF nanocubes. Scale bars in figures 12a and 12b both represent 2µm. The insets in figures 12a and 12b represent the water contact angle (CA) (top right) and a photograph (bottom right) of the corresponding samples.
Figures 12c and 12d respectively represent XRD patterns of ZIF-67 and ZIF-67@PDA-SF before and after exposure to a pH=13 NaOH solution for 24 h.
Figures 13a and 13b represent N₂ adsorption-desorption isotherms and CO₂ adsorption isotherms, respectively, of synthesized ZIF-67 nanocubes and of modified ZIF-67@PDA-SF.
Figures 14a and 14b represent SEM images of the products that were recovered after a 24 h exposure of ZIF-67 nanocubes to a pH = 13 NaOH aqueous solution and to a pH = 3 H₂SO₄ aqueous solution, respectively. Scale bars in figures 14a and 14b represent 1µm and 2µm, respectively. Figure 12a shows images of ZIF-67 nanocubes before exposure.
Figures 14c and 14d represent SEM images of the ZIF-67@PDA-SF nanocubes recovered after a 24h exposure to a pH = 13 NaOH aqueous solution and to a pH = 3 H₂SO₄ aqueous solution respectively. Scale bars in figures 14c and 14d represent 500nm and 2µm, respectively. Figure 12b shows images of ZIF-67@PDA-SF before exposure.
Figures 15a, 15b, 15c, 15d, 15e, 15f, illustrate the water contact angle of the unmodified samples including ZIF-8, Mg-MOF-74, MIL-100-Fe, UiO-66, Cu-TDPAT, and ZIF-69, respectively.
Figures 15g, 15h, 15i, 15j, 51k, 15l, illustrate the water contact angle of the corresponding "PDA-SF" modified samples, including ZIF-8@PDA-SF, Mg-MOF-74@PDA-SF, MIL-100-Fe@PDA-SF, UiO-66@PDA-SF, Cu-TDPAT@PDA-SF, ZIF-69@PDA-SF, respectively.
Figures 16a, 16b 16c and 16d show the water contact angle of Mg-MOF-74, Mg-MOF-74@PDA-SF with CA 100°, Mg-MOF-74@PDA-SF with CA 130° and Mg-MOF-74@PDA-SF with CA 138°, respectively.
Figure 16e shows XRD patterns of the samples shown in figures 16a to 16d.
Figures 17a to 17f show XRD patterns of the MOFs ZIF-8, Mg-MOF-74, MIL-100-Fe, UiO-66, Cu-TDPAT and ZIF-69, respectively, before and after the addition of PDA-SF.
Figures 18a and 18b show an XRD pattern of ZIF-8 before and after exposure to a NaOH solution (pH=13) for 24 h and the XRD patterns of ZIF-8@PDA-SF after exposure to a H₂SO₄ solution (pH=2) for 24h, respectively.
Figures 19a and 19b show XRD patterns of Mg-MOF-74 before and after exposure to a NaOH solution (pH=13) or to a H₂SO₄ solution (pH=1) for 24 h, respectively.
Figures 19c and 19d show XRD patterns of Mg-MOF-74@PDA-SF before and after exposure to a NaOH solution (pH=13) or to a H₂SO₄ solution (pH=1) for 24 h, respectively.
Figures 20a and 20b show XRD patterns of MIL-100-Fe before and after exposure to a NaOH solution (pH=12) or to a H₂SO₄ solution (pH=2) for 24 h, respectively.
Figures 21a and 21b show XRD patterns of UiO-66 before and after exposure to a NaOH solution (pH=13) or to a H₂SO₄ solution (pH=1) for 24 h, respectively.
Figures 21c and 21d show XRD patterns of UiO-66@PDA-SF before and after exposure to a NaOH solution (pH=13) or to a H₂SO₄ solution (pH=1) for 24 h, respectively.
Figures 22a and 22b show XRD patterns of Cu-TDPAT before and after exposure to a NaOH solution (pH=12) or to a H₂SO₄ solution (pH=2) for 24 h, respectively.
Figure 22c shows XRD patterns of Cu-TDPAT@PDA-SF before and after exposure to a H₂SO₄ solution (pH=2) for 24 h.
Figures 23a and 23b show XRD patterns of ZIF-69 before and after exposure to a NaOH solution (pH=11) or to a H₂SO₄ solution (pH=2) for 24 h, respectively.
Figures 23c shows XRD patterns of ZIF-69@PDA-SF after exposure to a NaOH solution (pH=11) for 24 h.

HKUST-1, also known as Cu₃(BTC)₂ Cu₃(BTC)₂ (BTC³⁻= benzene-1,3,5-tricarboxylate) is a MOF having structural instability in water. As this MOF is one of the most common MOFs and is also easy to synthesize and widely used for gas adsorption and catalysis, the inventors have used this MOF as the first example.

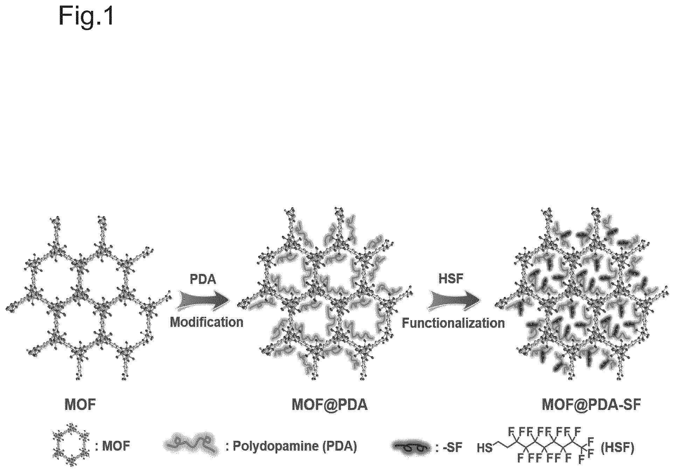

Figure 1 represents the modification process used to prepare hydrophobic MOF@PDA-SF composites. Starting from an unnamed MOF, figure 1 represents in a first step (PDA modification) the polymerization of dopamine monomers to form MOF@PDA and in a second step, the functionalization of said composite by reaction between 1H,1H,2H,2H-perfluorodecanethiol (HSF) and the PDA of MOF@PDA to form MOF@PDA-SF.

### Example 1: Synthesis of HKUST-1

HKUST-1 crystals were synthesized according to the following procedure. 5.000 g of 1,3,5-benzenetricarboxylic acid and 10.400 g of copper(II) nitrate trihydrate were stirred 10 min in the solution of 85 mL of water, 85 mL of ethanol and 85 mL of N,N-dimethyl formaldehyde (DMF) in 1-L wide mouth glass jar. The jar was tightly capped and placed in oven for 20 h at 85 °C to yield small octahedral crystals. After decanting the hot mother liquor, the product was rinsed with DMF and dichloromethane (DCM) and dried.

### Example 2: Preparation of HKUST-1@PDA

300 mg of HKUST-1 was dispersed in 30 mL methanol and then sonicated. Then, 75 mg free base dopamine was added and the reaction was stirred under an oxygen atmosphere. After 12 h, the HKUST-1@PDA composites were recovered through centrifugation and washed with methanol three times. It is to be noted that free base dopamine was added into the reaction system and polymerized under air so that no other catalytic additives were needed.

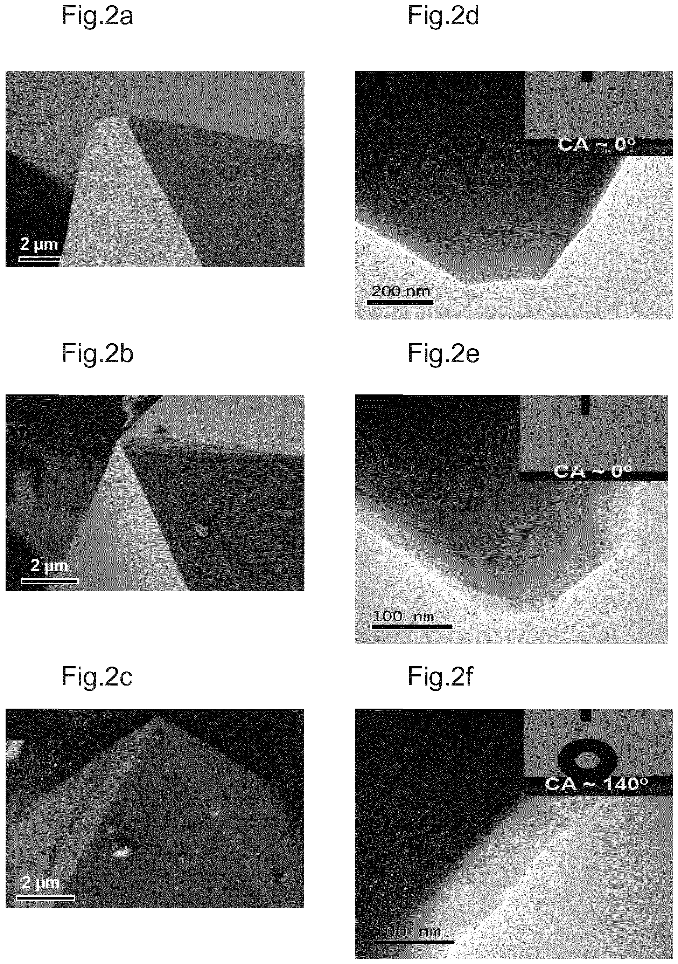

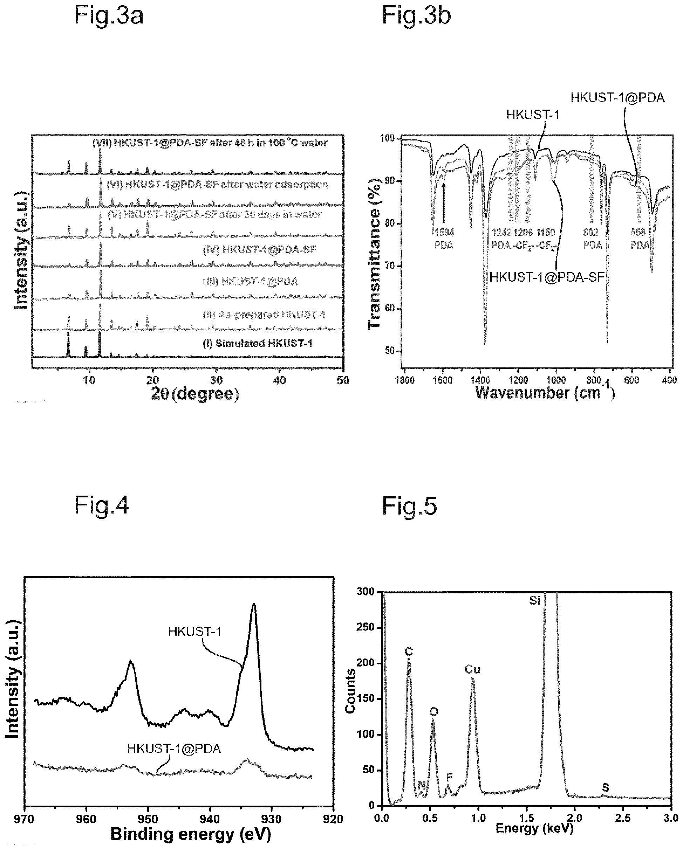

With the PDA modification, the sample turns from light blue to a dark color, typical of PDA. Further, the PDA coating on the external MOF surface can be clearly observed with both SEM and TEM imaging, as shown in figures 2b and 2e. The results presented in figure 2b reveal that the surface becomes rough. Moreover, figure 3a-III shows that the crystal structure is well maintained after PDA introduction.

Results of the FT-IR spectrum of HKUST-1@PDA presented in figure 3b shows the characteristic peaks belonging to PDA. Figure 3b shows the characteristic peaks of PDA located at 558, 802, 1242 and 1594 cm⁻¹, revealing the existence of PDA species in the HKUST-1@PDA sample. This experiment proves the polymer and -SF addition to the MOF surface.

Further, the high resolution XPS Cu 2p spectrum taken from HKUST-1@PDA is very weak when compared to HKUST-1, as shown in figure 4. This confirms that polymerization occurs on the external surface, which obstructs the penetration of the X-rays into the MOF.

### Example 3: Preparation of HKUST-1@PDA-SF

In this example, the HKUST1@PDA sample obtained in example 2 has undergone a fluorination step carried out via a Michael addition reaction between 1H,1H,2H,2H-perfluorodecanethiol (HSF) and PDA.

In order to do that, the HKUST1@PDA sample obtained in example 2 has been re-dispersed in 30 mL of methanol. After adding 90 µL 1H,1H,2H,2H-perfluorodecanethiol and 90 µL triethylamine, the suspension was stirred for another 12 h. When the reaction time was reached, the products were washed with MeOH three times and dried under vacuum for 6 h. Finally, the obtained materials were soxhleted using methanol overnight to wash the possible residual raw materials from inside the MOF pores. The recovered sample was dried under vacuum at room temperature for further use.

Results of figure 5 confirmed the presence of Cu, C, O, N, F and S elements in the HKUST-1@PDA-SF composite. It should be noted that the Si signal was from the silicon wafer used as a support.

Moreover, the XRD patterns presented in Figure 3a-IV reveal the MOF structure (MOF@PDA-SF) retains its crystallinity after the fluorination step.

Furthermore, the results shown in figures 2c and 2f show that the polymer layer is still present on the surface. Also, SEM of figure 2c reveals the presence of nano-papillae, which makes the surface quite rough. It should be noted that this kind of binary structure is similar to the natural lotus-leaf surface, which aids in repelling water.

Like for the HKUST-1@PDA sample, results of figure 3b show the characteristic peaks of PDA located at 558, 802, 1242 and 1594 cm⁻¹, revealing the existence of PDA species in the HKUST-1@PDA-SF sample. Moreover, the vibrational bands at 1150 and 1206 cm⁻¹ ascribed to the symmetric and asymmetric CF₂ stretches, respectively, could be observed clearly in the HKUST-1@PDA-SF sample, which also confirmed the presence of -SF functional groups in the fluorinated sample, HKUST-1@PDA-SF.

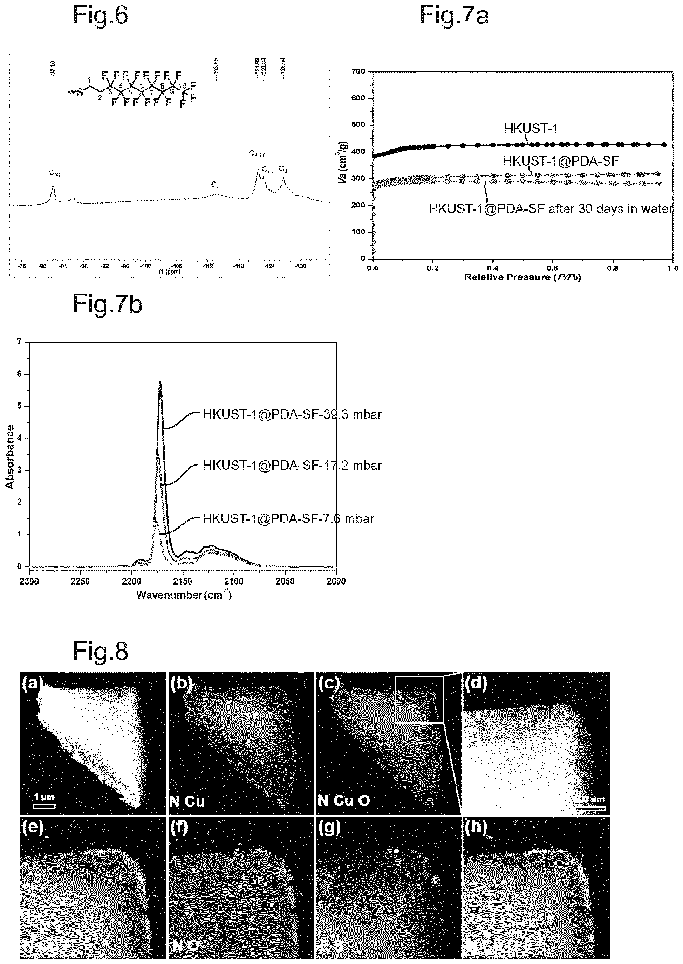

Moreover, the NMR spectrum shown in figure 6 confirms the successful grafting of the hydrophobic HSF molecules onto the MOF surface.

It should be pointed out that the BET surface area of HKUST-1@PDA-SF composite is 1110 m² g⁻¹, only slightly reduced from the parent material, 1583 m²g⁻¹ (figure 7a).

To further confirm the location of PDA-SF in the HKUST-1@PDA-SF composites, the elemental distribution was examined by scanning TEM (STEM) coupled with energy-dispersive X-ray spectroscopy (EDX). The results of these experiments show that the polymer PDA-SF containing N, F and S is located on the external surface of HKUST-1. (figure 8) However, given the possible diffusion of the dopamine precursor, small amounts of polymer may also be present inside of the MOF crystal.

Moreover, *in situ* diffuse reflectance infrared Fourier transform spectroscopy (in situ DRIFTs) was used to probe the material for open Cu(II) sites. The sample was activated and dosed with CO. As shown in figure 7b, the spectra showed the characteristic peak of Cu(II)-bound CO of ∼ 2176 cm⁻¹, a value that is significantly shifted from the expected stretching frequency of free CO, 2143 cm⁻¹, which implies that the PDA-SF is not bound to all of the open metal sites.

During this functionalization step, the HSF has reacted with the benzene ring of PDA, forming strong covalent bonds that makes the hydrophobic layer very difficult to remove.

### Example 4: Study of the stability of HKUST-1@DPDA-SF

In order to determine the effectiveness of the method according to the invention for improving MOF stability, both pristine HKUST-1 and HKUST-1@PDA-SF samples were exposed to water directly.

The general procedure to do this consists in the following steps: 9.0 mg of both pristine HKUST-1 and HKUST-1@PDA-SF samples were dispersed in water via sonication. Then the system was kept static until the desired time was reached. After the test, the sample was recovered and dried under vacuum for further characterizations.

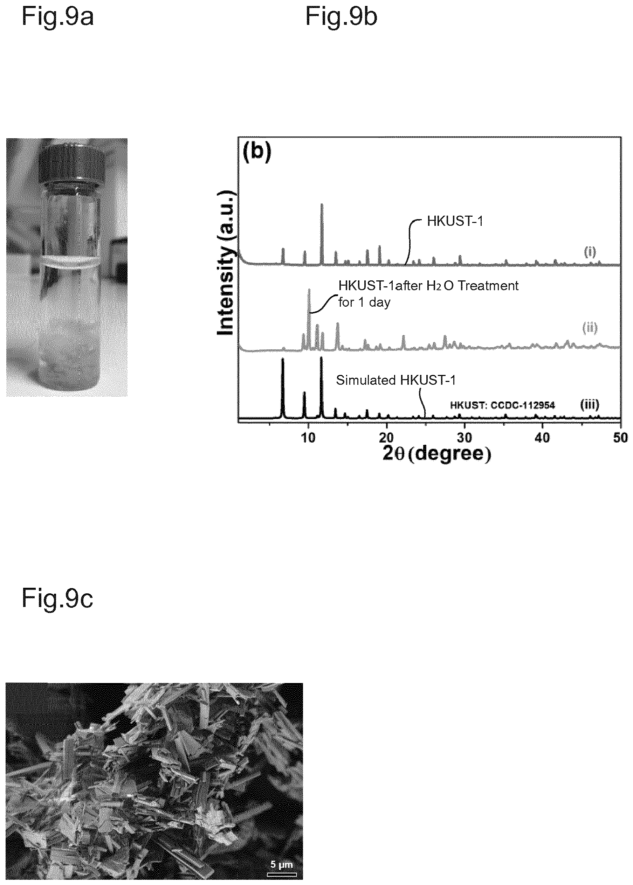

Figure 9a, illustrates that HKUST-1 is degraded after being immersed in water in less than a day.

The results represented in figures 9b and 9c are relative to the HKUST-1 sample recovered after exposure to H₂O for one day and confirm that the crystal structure and morphology changed.

On the contrary, HKUST-1@PDA-SF was well maintained even after soaking in water for thirty days. Indeed, the XRD patterns of figure 3a-V and the surface area measurements in figure 7a show no sign of degradation of the HKUST-1@PDA-SF.

Moreover, HKUST-1@PDA-SF survives the adsorption/desorption of H₂O vapor, with no sign of degradation after two cycles, as illustrated in figures 3a-VI and 10a. However, HKUST-1 loses a large percentage of its water sorption capacity after each successive adsorption/desorption cycle due to instability in water vapor. Further, it should be noted that despite the hydrophobic nature of the MOF composite the water adsorption profile does not change, and the capacity is only reduced from 0.6 g H₂O/g HKUST-1 to 0.45 g H₂O/g HKUST-1@PDA-SF. Considering that the -25% decrease in water adsorption correlates with the decrease in surface area (also -25%), it is thought that the surface coating is not significantly altering the materials functionality in water-based applications. Despite this, the surface coating is still able to significantly enhance the water stability of HKUST-1; the degradation of the materials has thus far been unobserved even after the material is boiled in 100 °C for two days or placed in highly acid or basic conditions (pH=∼2 or 13). (figures 3a-VII and 10b)

### Example 5: applicability of HKUST-1 in a number of water-based applications.

Given the unprecedented stability of HKUST-1@PDA-SF in water and the newly found hydrophobicity (with a water contact angle of 140° - see figure 2f), the surface modification of HKUST-1 offers an opportunity to, for the first time, demonstrate the applicability of HKUST-1 in a number of water-based applications.

The inventors attempted to carry out the separation of chloroform/H₂O, hexane/H₂O, toluene/H₂O and gasoline/H₂O as a proof-of-concept for separation of oil and other harmful organics from water. For this, a home-made separator was designed, as explained hereunder.

For this experiment, chloroform, hexane, toluene and gasoline were chosen as the representative of oil or harmful organic compounds. To make it more distinguishable, the water phase was dyed with methylene blue. The separation experiments were conducted on a home-made setup. Typically, a small piece of gauze was put on the bottom of a syringe, on which was placed with HKUST-1@PDA-SF and then another piece of gauze was put on the sample to generate a simple filter.

### i. Hexane/H₂O, toluene/H₂O and gasoline/H₂O phase separation experiment

Organic compounds including hexane, toluene and gasoline are lighter than water and remain on water. As HKUST-1@PDA-SF is hydrophobic, if the syringe is placed vertically the hexane, toluene and gasoline remain on water and the water cannot pass throught the HKUST-1@PDA-SF (indeed, the hydrophobic coating has significantly slowed water permeation), therefore there would be no contact between hexane, toluene and gasoline and the gauze impregnated with the transformed MOF HKUST-1@PDA-SF. So, for this experiment, the device was placed slantways to ensure the contact of the tested oil with the material. Hexane, toluene or gasoline quickly passed through the hydrophobic material and fell into a vial beneath it. At the end of the experiment, the device was straightened so that the water can contact with the material completely but the water could not penetrate the hydrophobic material layer. This experiment shows that HKUST-1@PDA-SF is convenient for hexane/H₂O, toluene/H₂O and gasoline/H₂O phase separation.

### ii. Chloroform/H2O phase separation experiment

For chloroform/water separation, the chloroform is heavier than water thus laid at the bottom of water, therefore the experiment has been made with the syringe placed vertically. With the HKUST-1@PDA-SF, the chloroform passed very fast through the transformed MOF while the water remained in the syringe and could not permeate through the material. This experiment shows that HKUST-1@PDA-SF is convenient for chloroform/H₂O phase separation.

The same procedure was used for HKUST-1 except that hydrophobic HKUST-1@PDA-SF was replaced by the hydrophilic HKUST-1. Because HKUST-1 is not water- or oil-repellant, it permits both water and oil permeation and is therefore not efficient for water/oil separation.

The separation of chloroform/H₂O, hexane/H₂O, toluene/H₂O and gasoline/H₂O is a proof-of-concept for oil/water separations.

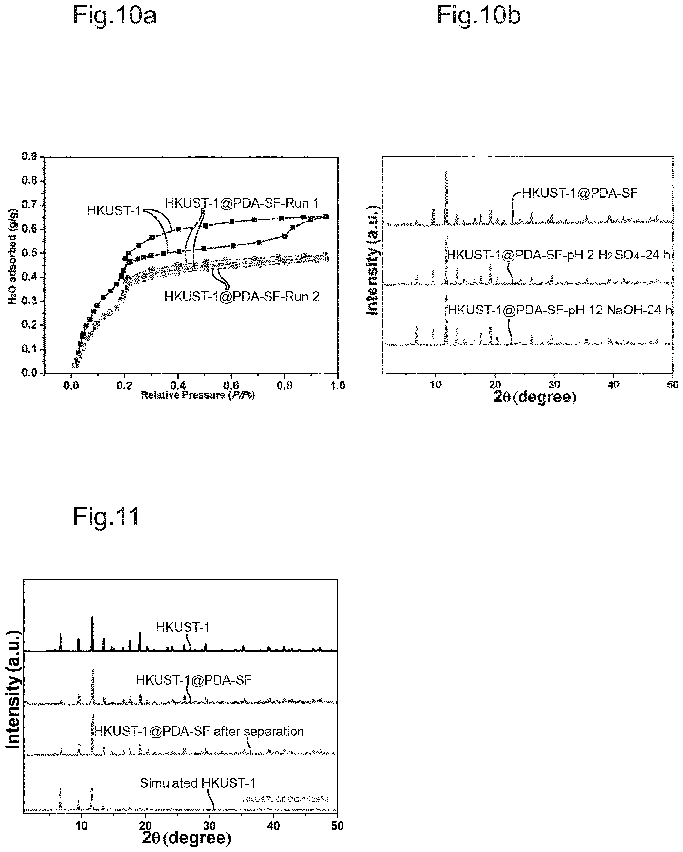

After the separation, the crystal structure of the recovered HKUST-1@PDA-SF is well maintained, as demonstrated by the XRD patterns of the HKUST-1@PDA-SF after oil/water separation illustrated in Figure 11. Considering the tunable pore size of MOFs, it was thought that the method according to the invention would have great potential to realize size selective separation of organic hydrocarbons.

Encouraged by the previously presented results, with HKUST-1, the inventors have extended this method to already water-stable MOFs to determine if stability can be achieved in harsher environments.

### Example 6: Study of the stability of ZIF-67 in harsher environments.

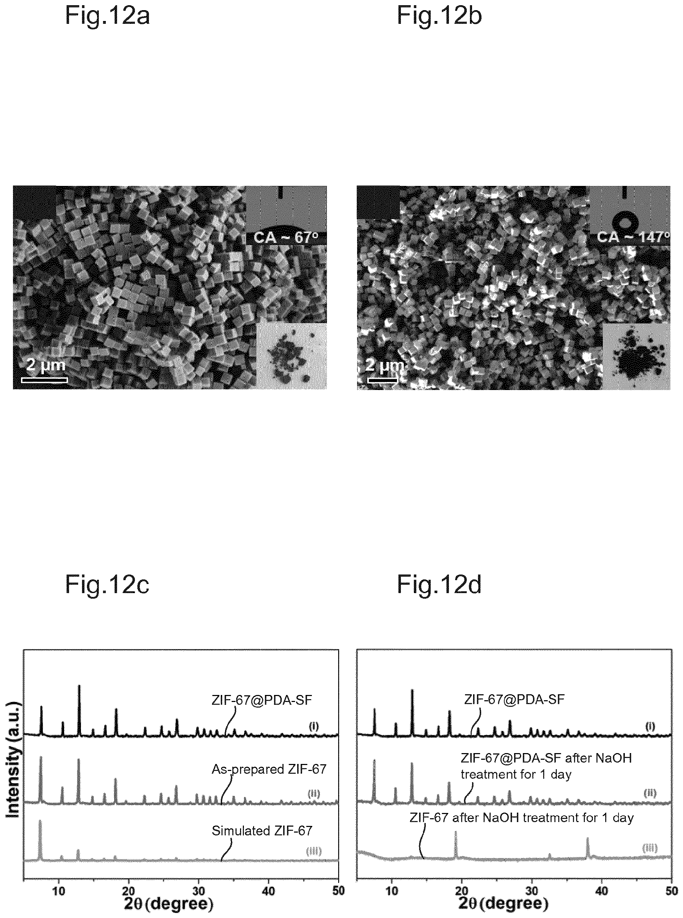

The ZIF-67 nanocubes were prepared according to the following process. 0.580 g of cobalt nitrate hexahydrate and 0.02 g of hexadecyl trimethyl ammonium bromide (CTAB) were dissolved into 20 mL of water to obtain a clear solution. Then 9.08 g of 2-methylimidazole was dissolved in 140 mL of water. Then the cobalt-containing solution was poured into the 2-methylimidazole solution under magnetic stirring. After stirring for 20 min, the resulting purple precipitates were centrifuged and washed thoroughly with ethanol three times and dried under vacuum at room temperature for 12 h. Figure 12a shows said obtained ZIF-67 nanocubes.

The composite, ZIF-67@PDA-SF, was also prepared. In order to do this 200 mg of ZIF-67 was dispersed in 20 mL methanol under ultrasonic. Then, 50 mg dopamine free base was added and the reaction was stirred under oxygen atmosphere. After 12 h, the ZIF-67@PDA composites were recovered through centrifugation and washed with methanol for three times and re-dispersed in 20 mL of methanol. After adding 60 µL 1H,1H,2H,2H-perfluorodecanethiol and 60 µL triethylamine, the suspension was stirred for another 12 h. When the reaction time was reached, the products were washed with MeOH three times and dried under vacuum for 6 h. Finally, the obtained materials were soxhleted using methanol overnight to wash the possible residual raw materials from inside the MOF pores. The recovered sample was dried under vacuum at room temperature for further use. Figure 12b shows said obtained ZIF-67@PDA-SF nanocubes.

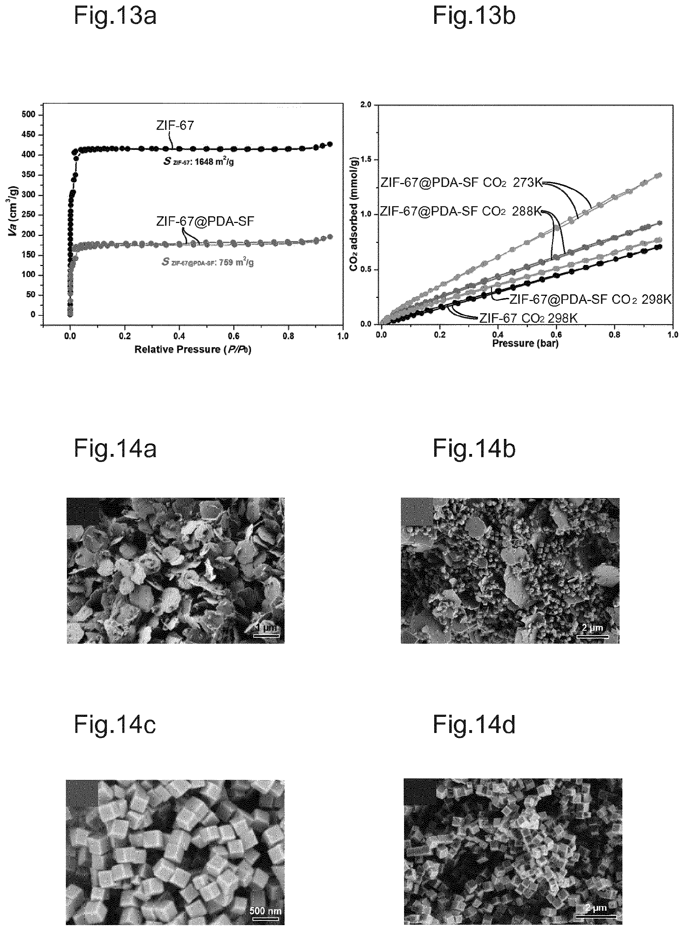

Similar to HKUST-1, the surface area of the modified ZIF-67@PDA-SF also decreased, as shown in figure 13a.

However, the CO₂ adsorption capacity was enhanced, as shown in figure 13b, likely due to interactions between the CO₂ and the nitrogen species found in PDA and strongly polarizing C-F species in the perfluoro coating.

From the SEM images of figure 12b, it can be seen that the nanocube morphology is well maintained after modification of ZIF-67 into ZIF-67@PDA-SF.

To test the improved stability of ZIF-67@PDA-SF (contact angle: 147°) (top right inset of figure 12b), aqueous NaOH solution (pH=13) and H₂SO₄ solution was employed (see figures 12c, 12d). For this test, 9.0 mg of ZIF-67 or ZIF-67@PDA-SF composite were dispersed in the NaOH or H₂SO₄ solution with sonication. Then the system was kept static for one day. After the test, the sample was rinsed with water to remove the residual base on the sample surface. The recovered sample was dried under vacuum for further characterization.

The parent structure, ZIF-67, degrades within 24h when immersed in either acid or base solution, as indicated by the XRD patterns and SEM images shown in figures 12d and 14a. However, ZIF-67@PDA-SF remains after 24h with no sign of degradations, as illustrated by figures 12d, 14c and 14d, implying that the coating method can protect this water stable MOFs in harsh conditions.

### Example 7: Study of the stability of several water stable MOFs including ZIF-8, Mg-MOF-74, MIL-100-Fe, UiO-66, Cu-TDPAT and ZIF-69 to see if their stabilities could also be improved in harsh, acidic or basic conditions.

Considering the strong affinity of PDA to various substrates, the inventors extended the method according to the invention to several other water stable MOFs including ZIF-8, Mg-MOF-74, MIL-100-Fe, UiO-66, Cu-TDPAT and ZIF-69 and show that the stabilities of these additional MOFs could also be improved in harsh, acidic or basic conditions.

Hereunder is explained how to obtain each of these MOFs and their associated modified composites.

### i. Preparation of ZIF-8@PDA-SF

### a. Step 1 - Synthesis of ZIF-8

ZIF-8 nanopolyhedrons were synthesized. 1.172 g of zinc nitrate hexahydrate was dissolved into 20 mL of methanol to obtain a clear solution. Then 2.592 g of 2-methylimidazole was dissolved in 20 mL of methanol. The 2-methylimidazole solution was poured into the zinc solution while stirring. After stirring for 1.5 h, the resulting white precipitate, ZIF-8, is removed from the solution and washed thoroughly with methanol four times and then dried.

### b. Step 2 - Modification of ZIF-8 into ZIF-8@PDA-SF

100 mg of ZIF-8 was dispersed in 10 mL methanol with sonication. Then, 25 mg of free base dopamine was added, and the reaction was stirred under an oxygen atmosphere. After 12 h, the ZIF-8@PDA composite was recovered via centrifugation and washed with methanol three times and re-dispersed in 10 mL methanol. After adding 30 uL 1H,1H,2H,2Hperfluorodecanethiol and 30 uL triethylamine, the suspension was stirred for another 12 h. The resulting product was washed with MeOH three times and then dried under vacuum for 6 h. Finally, the materials were soxhleted using methanol overnight to wash any residual raw materials from the MOF pores. The recovered sample was dried under vacuum at room temperature for further use.

### ii. Preparation of Mg-MOF-74@PDA-SF

### a. Step 1 - Synthesis of Mg-MOF-74

Mg-MOF-74 was synthesized in a microwave reactor to accelerate the synthetic process. In a solution containing 30 mL dimethylformamide, 2 mL ethanol, and 2 mL water, 0.299 g 2,5-dihydroxyterephthalic acid and 1.244 g Mg(NO3)2·6H2O were dissolved via sonication. The resulting stock solution was decanted into five 10 mL PTFE microwave reaction tubes. The reaction solution was then rapidly heated to 125 °C in 25 min (1200 W power) and was held at this temperature for 4 h. After cooling to room temperature, the solid products were collected by centrifugation and washed three times with methanol and dried for further use.

### b. Step 2 - Preparation of Mg-MOF-74@PDA-SF

### 1) with contact angle ∼ 100°

100 mg of Mg-MOF-74 was dispersed in 10 mL methanol via sonication. Then, 25 mg free base dopamine was added and the reaction was stirred under oxygen atmosphere. After 12 h, the Mg-MOF-74@PDA composites were recovered through centrifugation and washed with methanol three times and re-dispersed in 10 mL methanol. After adding 30 µL 1H,1H,2H,2H-perfluorodecanethiol and 30 µL triethylamine, the suspension was stirred for another 12 h. When the reaction time was reached, the products were washed with MeOH three times and dried under vacuum for 6 h. Finally, the obtained materials were soxhleted using methanol overnight to wash any possible residual raw materials from the MOF pores. The recovered sample was dried under vacuum at room temperature for further use.

### 2) with contact angle ∼ 130°

50 mg of Mg-MOF-74 was dispersed in 5 mL methanol via sonication. Then, 25 mg of free base dopamine was added and the reaction was stirred under an oxygen atmosphere. After 12 h, the Mg-MOF-74@PDA composite was recovered through centrifugation and washed with methanol 3 times and then re-dispersed in 5 mL of methanol. After adding 30 µL of 1H,1H,2H,2H-perfluorodecanethiol and 30 of µL triethylamine, the suspension was stirred for another 12 h. When the reaction time was reached, the products were washes with MeOH three times and then dried under vacuum for 6 h. Finally, the obtained materials were soxhleted using methanol overnight to wash any possible residual raw materials from the MOF pores. The recovered sample was dried under vacuum at room temperature for further use.

### 3) with contact angle ∼ 138°

50 mg of Mg-MOF-74 was dispersed in 5 mL methanol via sonication. Then, 50 mg of free base dopamine was added and the reaction was stirred under an oxygen atmosphere. After 12 h, the Mg-MOF-74@PDA composite was recovered through centrifugation and washed with methanol 3 times and then re-dispersed in 5 mL methanol. After adding 60 µL of 1H,1H,2H,2H-perfluorodecanethiol and 60 µL of triethylamine, the suspension was stirred for another 12 h. When the reaction time was reached, the products were washed with MeOH three times and then dried under vacuum for 6 h. Finally, the obtained materials were soxhleted using methanol overnight to wash any possible residual raw materials from the MOF pores. The recovered sample was dried under vacuum at room temperature for further use.

### iii. Preparation of Fe-BTC@PDA-SF

### a. Step 1 - Synthesis of MIL-100-Fe, also known as Fe-BTC

The inventors have modified published procedures for Fe-BTC synthesis to simplify the synthetic process. For this, 9.72 g of iron(III) chloride hexahydrate, 3.36 g of 1,3,5-benzenetricarboxylic acid and 120 mL of distilled water were loaded in a 180 mL Teflon autoclave. The reaction mixture was heated to 130 °C for 72 h. After cooling down to room temperature, the orange solid was filtered under vacuum and washed with water and methanol.

### b. Step 2 - Modification of Fe-BTC into Fe-BTC@PDA-SF

50 mg of Fe-BTC was dispersed in 5 mL methanol via sonication. Then, 25 mg of free base dopamine was added and the reaction was stirred under an oxygen atmosphere. After 12 h, the Fe-BTC@PDA composite was recovered through centrifugation and washed with methanol 3 times and then re-dispersed in 5 mL methanol. After adding 30 µL of 1H,1H,2H,2Hperfluorodecanethiol and 30 µL of triethylamine, the suspension was stirred for another 12 h. When the reaction time was reached, the products were washed with MeOH three times and then dried under vacuum for 6 h. Finally, the obtained materials were soxhleted using methanol overnight to wash any possible residual raw materials from inside the MOF pores. The recovered sample was dried under vacuum at room temperature for further use.

### iv. Preparation of UiO-66@PDA-SF

### a. Step 1 - Synthesis of UiO-66

0.125 g of ZrCl₄, 5 mL DMF and 1 mL concentrated HCI were loaded into an 8-dram vial and sonicated for 20 minutes, then 0.123 g of terephthalic acid and 10 mL DMF were added to the mixture and sonicated for an additional 20 minutes. The resulting mixture was then heated at 80 °C for 24 hours.

### b. Step 2 - Modification of UiO-66 into UiO-66@PDA-SF

50 mg of UiO-66 was dispersed in 5 mL methanol via sonication. Then, 50 mg of free base dopamine was added and the reaction was stirred under an oxygen atmosphere. After 12 h, the UiO-66@PDA composite was recovered through centrifugation and washed with methanol three times and then re-dispersed in 5 mL of methanol. After adding 60 µL of 1H,1H,2H,2H perfluorodecanethiol and 60 µL of triethylamine, the suspension was stirred for another 12 h. When the reaction time was reached, the products were washed with MeOH three times and then dried under vacuum for 6 h. Finally, the obtained materials were soxhleted using methanol overnight to wash any possible residual raw materials from inside the MOF pores. The recovered sample was dried under vacuum at room temperature for further use.

### v. Preparation of Cu-TDPAT@PDA-SF

### a. Step 1 - Synthesis of Cu-TDPAT

H₆-TDPAT ligand, which is used to make the Cu-TDPAT MOF, was synthesized exactly as it has been reported in the literature (B. Li, Z. Zhang, Y. Li, K. Yao, Y. Zhu, Z. Deng, F. Yang, X. Zhou, G. Li, H. Wu, N. Nijem, Y. J. Chabal, Z. Lai, Y. Han, Z. Shi, S. Feng, J. Li, Angew. Chem. Int. Ed. 2012, 51, 1412-1415).

For the MOF synthesis, 0.450 g of H₆-TDPAT, 2.640 g of Cu(NO₃)₂·3H₂O, 30 mL of DMAc, 30 mL of DMSO, 13.5 mL of HBF₄, and 1.5 mL of water were mixed and stirred for 5 minutes in a 250 mL jar. This solution was heated at 85 °C in an oven for three days. The solution was immediately removed from the oven and the hot mother liquor was separated from the powder via filtration. The product was rinsed with DMAc and methanol and then dried.

### b. Step 2 - Modification of Cu-TDPAT into Cu-TDPAT@PDA-SF

100 mg of Cu-TDPAT was dispersed in 10 mL methanol via sonication. Then, 6.3 mg of free base dopamine was added and the reaction was stirred under an oxygen atmosphere. After 12 h, the Cu-TDPAT@PDA composites were recovered through centrifugation and washed with methanol 3 times and then re-dispersed in 10 mL of methanol. After adding 7.5 µL of 1H,1H,2H,2H-perfluorodecanethiol and 7.5 µL of triethylamine, the suspension was stirred for another 12 h. When the reaction time was reached, the products were washed with MeOH three times and then dried under vacuum for 6 h. Finally, the obtained materials were soxhleted using methanol overnight to wash any possible residual raw materials from the MOF pores. The recovered sample was dried under vacuum at room temperature for further use.

### vi. Preparation of ZIF-69@PDA-SF

### a. Step 1 - Synthesis of ZIF-69

ZIF-69 crystals were synthesized according to the following procedure. 1.326 g of 2-nitroimidazole, 1.720 g of 5-chlorobenizimidazole, and 3.345 g of Zn(NO₃)₂·6H₂O were dissolved in 170 mL of DMF in a big vessel. The solution was stirred for 10 minutes followed by sonication for further 10 minutes. 45 mL of this solution was poured into 100 mL vials and sealed. Then the vials were heated at 85 °C for three days. After decanting the hot mother liquor, the product was rinsed with DMF and ethanol and then dried.

### b. Step 2 - Modification of ZIF-69 into ZIF-69@PDA-SF

100 mg of ZIF-69 was dispersed in 10 mL methanol via sonication. Then, 25 mg of free base dopamine was added and the reaction was stirred under an oxygen atmosphere. After 12 h, the ZIF-69@PDA composites were recovered through centrifugation and washed with methanol 3 times and re-dispersed in 10 mL of methanol. After adding 30 µL of 1H,1H,2H,2H-perfluorodecanethiol and 30 µL of triethylamine, the suspension was stirred for another 12 h. When the reaction time was reached, the products were washes with MeOH three times and then dried under vacuum for 6 h. Finally, the obtained materials were soxhleted using methanol overnight to wash any possible residual raw materials from the MOF pores. The recovered sample was dried under vacuum at room temperature for further use.

Table 1 hereunder indicates the color of each obtained sample.

**Table 1 - Colors of previously mentioned MOFs samples**

| **MOF** | **ZIF-8** | **Mg-MOF-74** | **MIL-100-Fe** | **UiO-66** | **Cu-TDPAT** | **ZIF-69** |
|---|---|---|---|---|---|---|
| **Color** | White | Green/Yellow | Brown/Orange | White | Blue | Yellow |
| **Modified MOF** | **ZIF-8 @PDA-SF** | **Mg-MOF-74 @PDA-SF** | **MIL-100-Fe @PDA-SF** | **UiO-66 @PDA-SF** | **Cu-TDPAT @PDA-SF** | **ZIF-69 @PDA-SF** |
| **Color** | Black | Black | Black | Black | Black | Black |

From this table 1, it can be seen that after modification, all samples became black, reflecting the introduction of PDA.

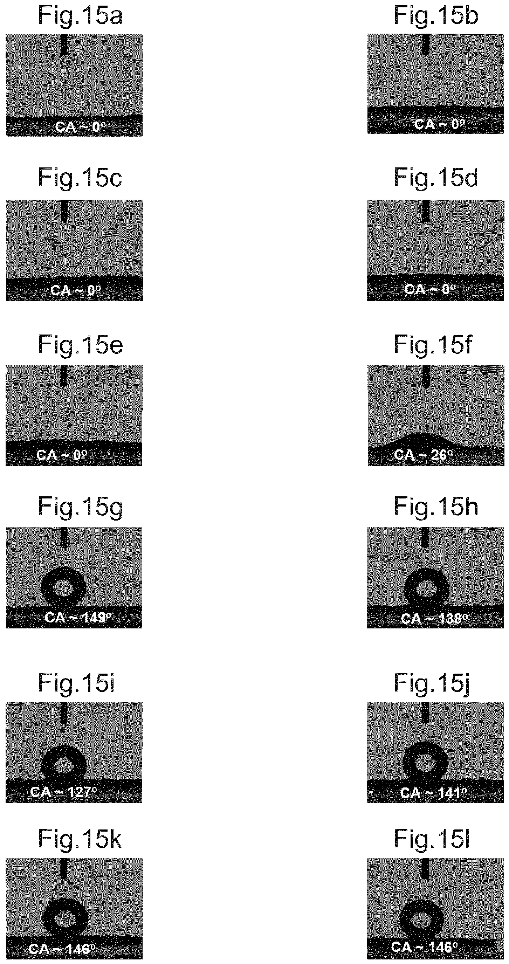

In figures 15a to 15l it can be seen that the water contact angle (CA) increased for all MOFs after addition of PDA-SF.

For Cu-TDPAT@PDA-SF (CA∼146°), ZIF-69@PDA-SF (CA∼146°) and ZIF-8@PDA-SF (CA∼149°), the contact angle is very close to a super-hydrophobic value (around 150°). Moreover, due to the high hydrophobicity, water drops readily roll off the surface of ZIF-8@PDA-SF during contact angle experiments.

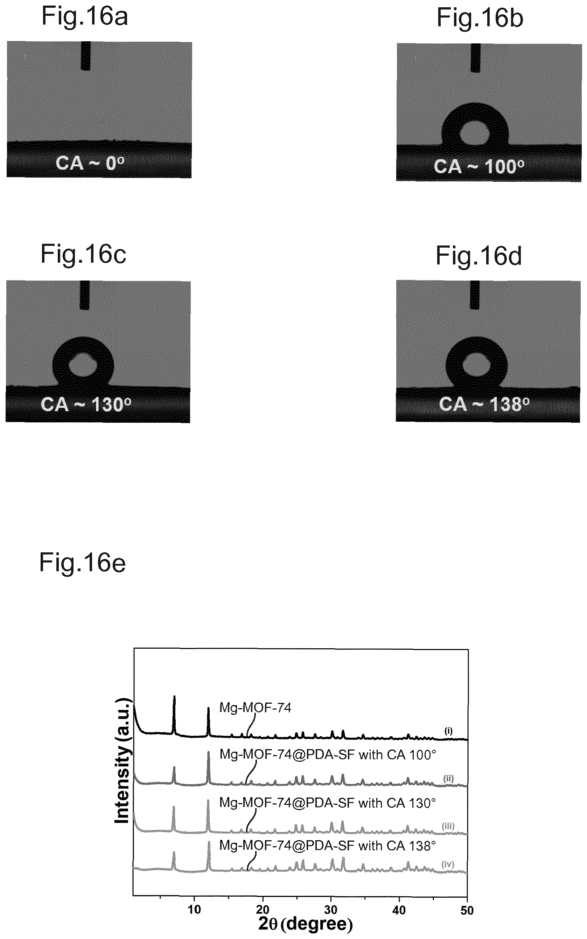

In addition, the hydrophobic nature of the MOF is easily tuned by introducing varying amounts of free-base dopamine and HSF. For example, the contact angle increased from 100° to 138° by adding more free-base dopamine and HSF during the modification of Mg-MOF-74, as illustrated in figures 16a to 16e.

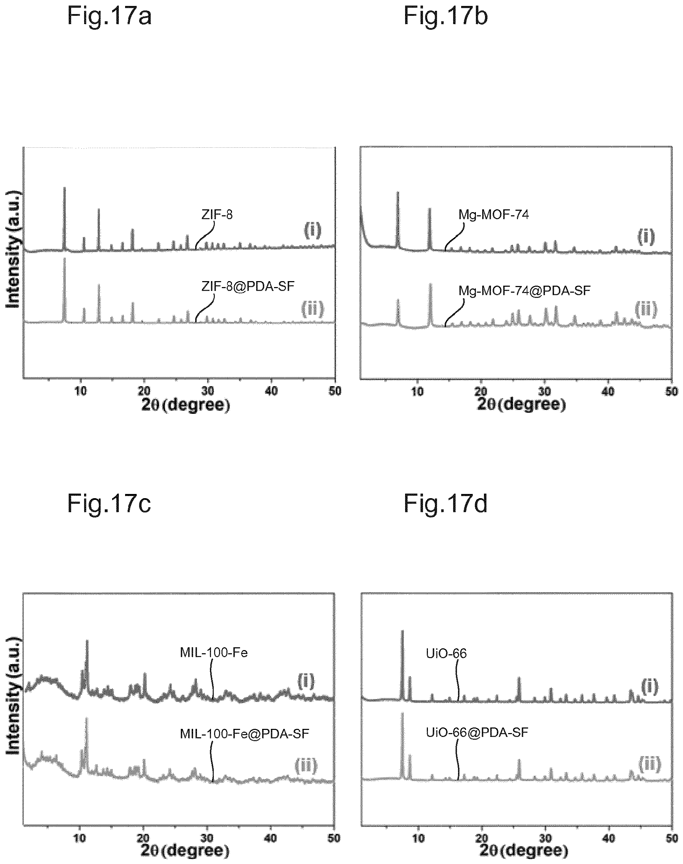

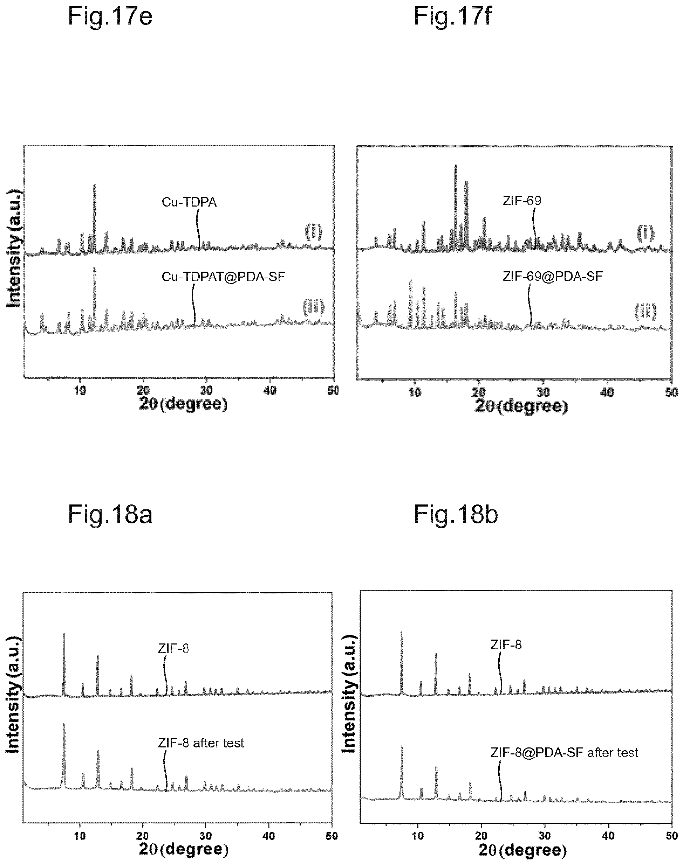

It should be noted that for all studied MOFs, PXRD shows the structures of the parent materials are well maintained after modification, as illustrated in figures 17a to 17f.

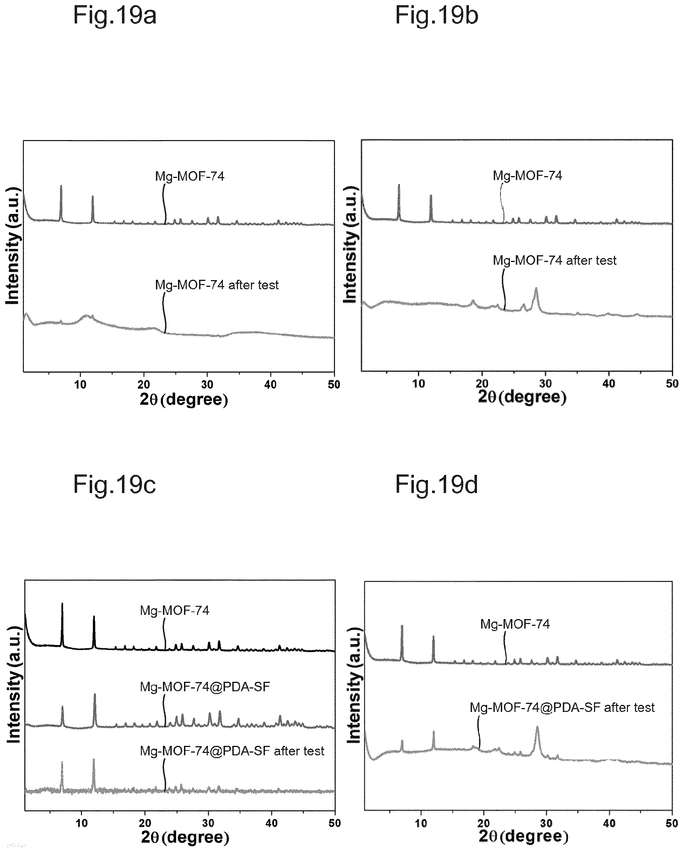

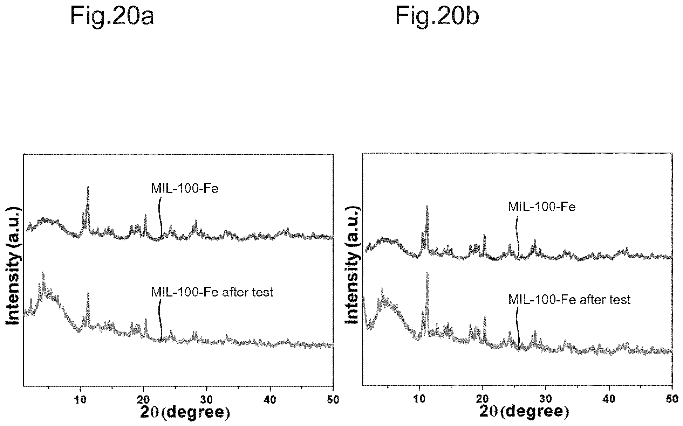

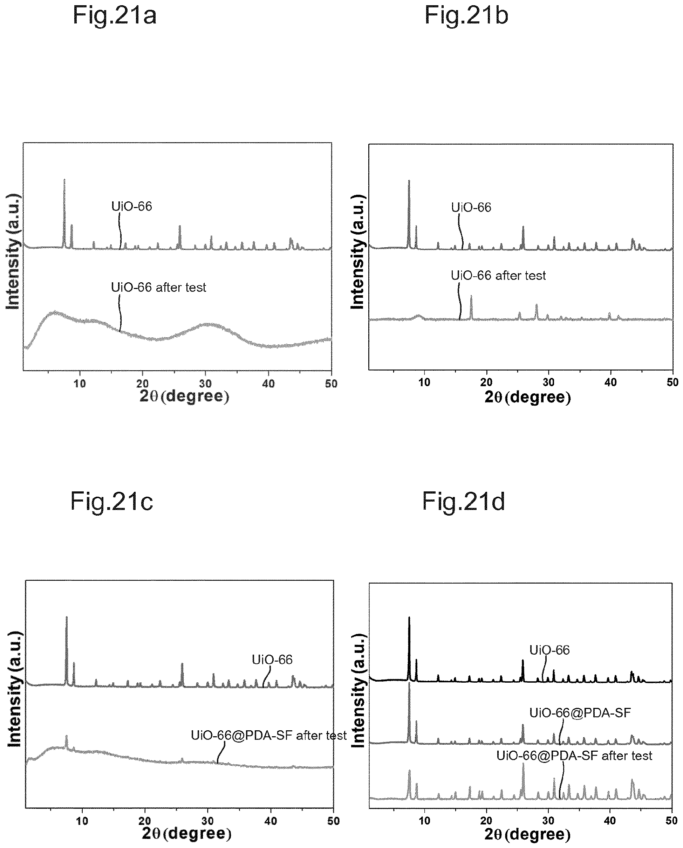

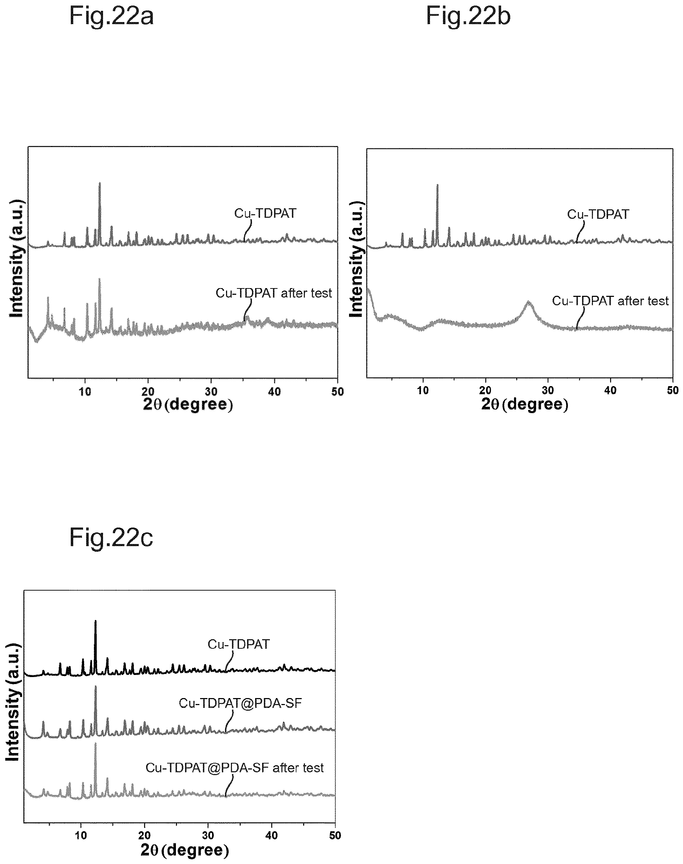

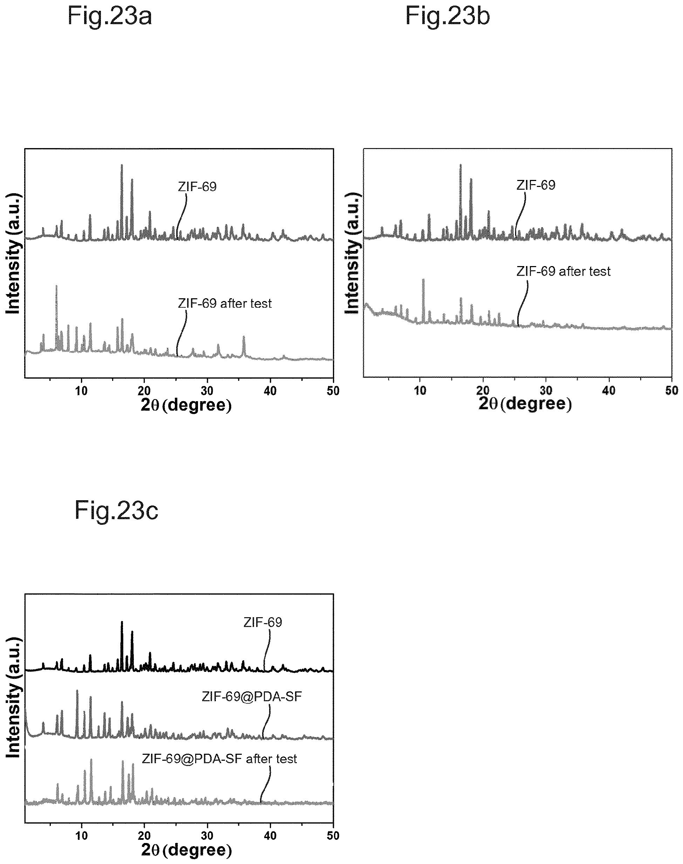

The modified ZIF-8, Mg-MOF-74, UiO-66, Cu-TDPAT and ZIF-69 composites exhibit high stability in either acidic or basic conditions when compared with that of the parent materials, as shown in Figures 18a to 23c and Table 2 hereunder. For example, ZIF-8 dissolved completely when introduced into the H₂SO₄ solution.

The general procedure for this stability test is as follow: 9.0 mg of MOFs or MOF composites were dispersed in the NaOH solution (pH = 11, 12 or 13) or H₂SO₄ solution (pH=1, 2 or 3) via sonication. Then the system was kept static until the desired time was reached. After the test, the sample was rinsed with water to remove the residual base on the sample surface. Each recovered sample was dried under vacuum for further characterization.

**Table 2 - Comparison of the properties and stabilities of the parent MOFs and their corresponding MOF-composites soaked under highly acidic or basic conditions for 24 hours. Check means stable and cross means unstable.**

| **Sample name / formula** | **Contatct Angle** (°) | **NaOH, pH = 11, 12 or 13 for 24 hrs** | **H₂SO₄ pH = 1, 2 or 3 for 24 hrs** |
|---|---|---|---|
| HKUST-1 | ∼0 | *X* | *X* |
| Cu₃(BTC)₂, BTC³⁻= benzene-1,3,5-tricarboxylate | | | |
| HKUST-1@PDA-SF | 140 | ✔ | ✔ |
| ZIF-67 | 67 | *X* | *X* |
| Co(MIm)₂, MIm=2-methylimidazolate | | | |
| ZIF-67@PDA-SF | 147 | ✔ | ✔ |
| ZIF-8 | ∼0 | ✔ | *X* |
| Zn(MIm)₂, MIm=2-methylimidazolate | | | |
| ZIF-8@PDA-SF | 149 | ✔ | ✔ |
| Mg-MOF-74 | ∼0 | *X* | *X* |
| Mg₂(dobdc), dobdc⁴⁻ = 2,5-dioxido-1,4-benzebedicarboxylate | | | |
| Mg-MOF-74@PDA.SF | 138 | ✔ | *X* |
| MIL-100-Fe | -0 | ✔ | ✔ |
| Fe₃(BTC)₂, BTC³⁻= benzene-1,3,5-tricarboxylate | | | |
| MIL-100-Fe@PDA-SF | 127 | ✔ | ✔ |
| UiO-66 | ∼0 | *X* | *X* |
| Zr₆O₄(OH)₄(BDC)₆, BDC²⁻= 1,4-dicarboxybenzene | | | |
| UiO-66@PDA-SF | 141 | *X* | ✔ |
| Cu-TDPAT | ∼0 | *X* | *X* |
| Cu₃(TDPAT), TDPAT=2,4,6-tris(3,5-dicarboxylphenylamino)-1,3,5-triazine | | | |
| Cu-TDPAT@PDA-SF | 146 | ✔ | ✔ |
| ZIF-69 | -26 | *X* | ✔ |
| Zn(cbIm)(nIm), cbIm= 5-chlorobenzimidazole, nIm=2-nitroimidazole | | | |
| ZIF-69@PDA-SF | 146 | ✔ | ✔ |

The simple method according to the invention enables the introduction of highly hydrophobic coatings on a number of different MOFs significantly enhancing MOF stability in aqueous media and even in highly basic or acidic conditions. This method is an effective, universal way to introduce hydrophobicity to MOFs and improve their stability.

As shown in the examples above, the method according to the invention where the polymer is PDA and where the hydrophobic compound is HSF makes full use of the powerful adhesive property of polydopamine, following a simple functionalization with hydrophobic HSF molecules. It is thus to be thought that this universal method would allow many other MOFs to be modified and then employed in applications that were before inaccessible.

As a proof-of-concept, HKUST-1@PDA-SF is shown to be cyclable with water adsorption (with limited impact of the surface area) and for the first time applicable in the separation of harmful organics from water. In view of these results, the applicant believes that the outlined composites and others made according to the invention will be good for use in the separation of harmful organics, oil or metals from water, catalysis, adsorption, selective gas separation, or drug delivery.

The ability of PDA to form linkages with MOFs comes from its amine/imino and hydroxyl functionalities. In addition to this, PDA can also undergo reactions with hydrophobic compounds due to the presence of double bonds, which promote a Michael addition with the hydrophobic HSF in the presence of triethylamine.

The inventors have good reasons to think that PDA could be readily replaced by other similar polymers that contain both a functionality that promotes electron donation, electron acceptance, Bronsted acidity or Bronsted basicity and a Lewis base functionality that is known to provide adhesive properties. The latter can be used to promote the adhesion of the polymer to the MOF surface. Some examples of these polymers include polycatechols, polyphenylthiols, polyphenylcarboxylates, and polyphenylamines.

For polyphenols and polycathecols compounds, the hydroxyl group could provide strong adhesive ability to substrates for further hydrophobic modification. Besides, the phenols groups could also be oxidized and the Michael addition reaction could also occur. For polyphenylamines, because of the coordinating ability of amines, it could also adhere to the substrate. The basic property of the amine allows the polyphenylamines to react with hydrophobic organic acid through acid-base neutralization reaction to functionlize materials' surface. Moreover, alcoholysis reactions between polyphenols/polycathecols/polyphenylamines and hydrophobic compounds could also be used to functionalize the surface of the MOF that is covered by a polymer.

In a similar way, the inventors have good reasons to think that any hydrophobic compound able to react with the polymer linked to the MOF would be efficient. As such the hydrophobic molecules described have the desired functionality that is known to undergo a variety of transformations for the formation of C-S, C-C, C-N, or C-O covalent bonds with the aforementioned polymers.

Hereunder are more details concerning the experiments conducted for examples 1 to 7.

### Materials:

Dopamine hydrochloride (99%), 1H,1H,2H,2H-perfluorodecanethiol (97%), zinc nitrate hexahydrate (reagent grade, 98%), 2-methylimidazole (99%), cyanuric chloride (99%), sodium hydroxide (reagent grade, =98%, pellets, anhydrous), terephthalic acid (98%), sodium hydride (dry, 95%) and styrene (ReagentPluse, contains 4-tert-butylcatechol as stabilizer, =99%) were provided by Sigma-Aldrich. Iron(III) chloride hexahydrate (97%) was bought from Alfa-Aesar.copper(II) nitrate trihydrate (99.5%), 1,3,5-benzenetricarboxylic acid (98%), 5-aminoisophthalic acid (95%), cobalt(II) nitrate hexahydrate (99%, reagent), zirconium(IV) chloride (reactor grade, 99.5%, metals basis) were provided by ABCR GmbH. 2-Nitroimidazole was purchased from Fluorochem. 5-Chlorobenzimidazole, 1,3,5-trimethylbenzene (>97.0%) were supplied by TCI. 1,4-Dioxane (min. 99.5 %, extra pure) and triethylamine (min. 99.5 %, for synthesis) were purchased from Roth AG.

### Characterization:

X-ray diffraction (XRD) patterns were performed on a Bruker D8 diffractometer with Cu Kα radiation (λ= 1.5418 Å) at 40 kV and 40 mA. The morphology and microstructures of the samples were characterized by scanning electron microscopy (FEI Teneo SEM) and transmission electron microscopy (FEI Tecnai G2 Spirit Twin). Scanning electron microscopy (SEM) analysis was performed on a FEI Teneo at an accelerating voltage of 1.00 kV and using a beam current of 100 pA. SEM images were acquired with an in-column (Trinity) detector.

SEM energy dispersive X-ray (EDX) spectra were acquired using an XFlash silicon drift detector from Bruker. The electron beam condition was optimized for the SEM-EDX measurements with an accelerating voltage of 20 kV and a beam current of 1.6 nA. Conventional bright-field transmission electron microscopy (BF-TEM) images were acquired with a FEI Tecnai G2 Spirit Twin at an accelerating voltage of 120 kV. High-angle annular dark-field images and EDX elemental maps were acquired with a FEI Osiris in scanning TEM (STEM) mode at an accelerating voltage of 200 kV. This microscope is equipped with a high brightness X-FEG gun and silicon drift Super-X EDX detectors.

XPS measurement was performed using a Physical Instruments AG PHI VersaProbe II scanning XPS microprobe.

Analysis was performed using a monochromatic Al Kα X-ray source of 24.8 W power with a beam size of 100 µm.

Nitrogen adsorptiondesorption isotherms were obtained on a BELSORP-max instrument at 77 K.

The surface area of the materials was measured by the Brunauer-Emmett-Teller (BET) method.

Water contact angle was tested on MXC906 Easy Drop instrument with drop volumn: 10 uL, flow rate: 285 uL/min.

The IR data was obtained on PerkinElmer Frontier Spectrometer in ATR mode. In-situ IR data were collected in DRIFTS mode using a commercial infrared cell at 150 K and a custom built manifold used to dose CO into the sample.

### Free Base Dopamine Synthesis (Monomer for PDA)

Dopamine HCl, dry sodium hydride 95% and anhydrous solvents were bought from Sigma Aldrich and used without further purification. In a N₂ purged, 2-neck round bottom flask, 10 g of Dopamine HCI was mixed with 80 mL of anhydrous tetrahydrofuran (THF) and 80 mL of anhydrous methanol. 1.264 g of dry sodium hydride 95% was added slowly in small quantities over a period of approximately 15 minutes. The reaction mixture was allowed to stir for 48 hours with flowing N₂. After the completion of the reaction, the mixture was filtered under vacuum and washed with copious amounts of THF. The white powder was dried and kept under vacuum until further use.

## Claims

1. A method for synthesis of a metal organic framework composite comprising the following steps:
a) Synthesize a metal organic framework;
b) Make a polymer grow on said metal organic framework, said polymer being chosen among polymers having
i. at least a Lewis Base functionality which allows said polymer to bind to the metal organic framework surface, and
ii. at least another functionality that promotes electron donation, electron acceptance, Bronsted acidity or Bronsted basiscity, which allows one to carry out the following step c).
c) Functionalize the surface of the product obtained in step b) by a chemical reaction between said polymer and a hydrophobic compound.

2. A method according to claim 1, wherein said Lewis Base functionality comprises -OH, -NH₂, -COOH, or -SH.

3. A method according to claim 1 or 2, wherein said at least another functionality comprises -OH, -SH, -NO₂, -NH₂, -NHR₁, -COOH, -COOR₁, -C≡N, -C=O, -C=C-, -C=N-, or -C=S, preferably -C=O, -C=C-, -C=N-, -NH₂, or -OH, R₁ being chosen among alkyl, alkenyl, alkynyl and phenyl groups.

4. A method according to any of claims 1 to 3, wherein said polymer could be constructed from monomers that contain phenyl rings, preferably from one or more of the following monomers: 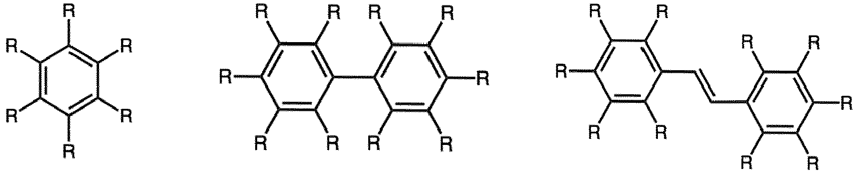 where each R group can be chosen among the following: -H, -CH₃, -NH₂, - R₁NH₂, -NO₂, -R₁NO₂, -N(R₁)₂, -OH, -F, -CI, -Br, -I, -CF₃, -R₁, -SH, - C≡CR₁, -C≡N, -NCO, -NCS, -OCN, -CH=R₁, -COH, -COCI, -COOH, - COR₁, -NHR₁, -R₁NHR₁, -C=NH, -COOR₁, -R₁NH₂COOH, -OR₁, - R₁NH₂COOCH₃ or derivatives thereof, preferably, one or more of said R groups are chosen among the following: -NH₂, -OH, -COOH, -SH, R₁ being chosen among alkyl, alkenyl, alkynyl and phenyl groups.

5. A method according to claim 4, wherein said polymer could be constructed from one or more of the following monomers:

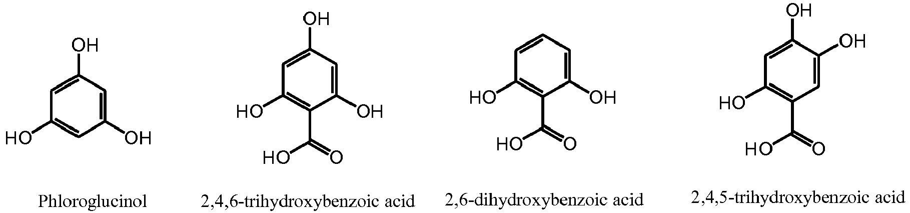

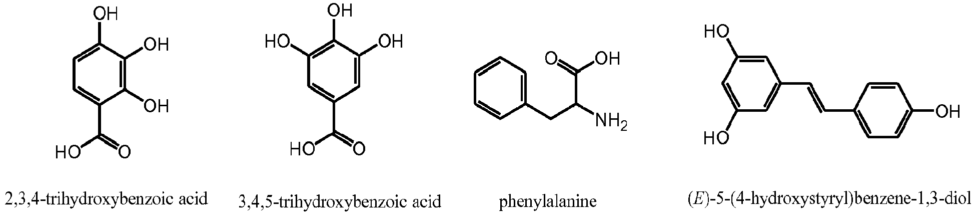

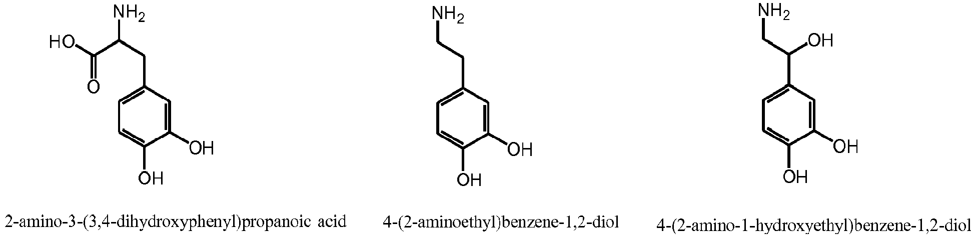

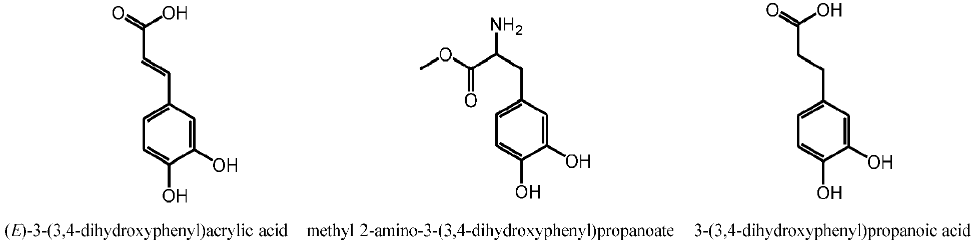

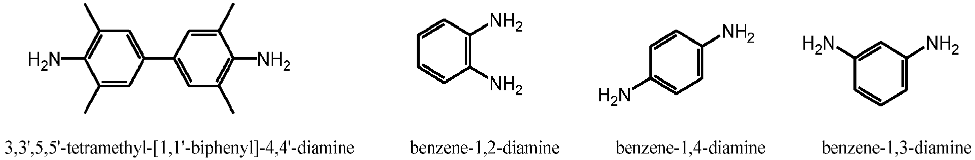

6. A method according to claim 4, wherein said polymer is a catechol, and preferably wherein said polymer could be constructed from naturrally occuring biomolecules like catechins such as the following:

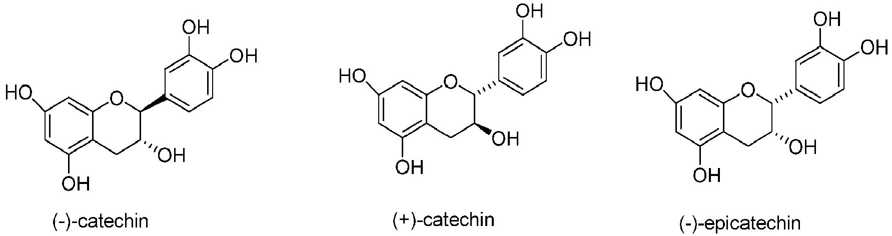

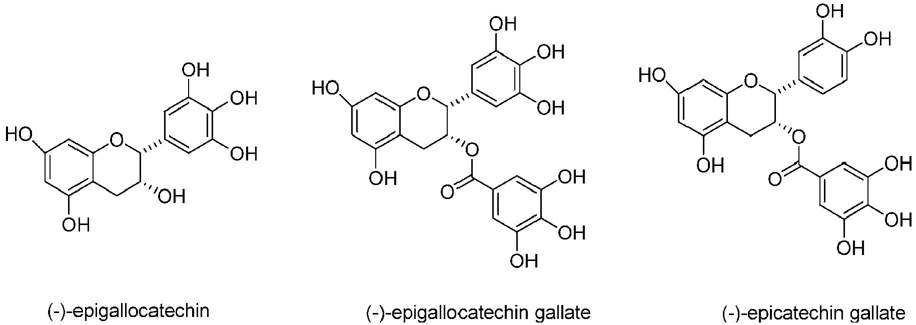

7. A method according to any of the preceding claims, wherein the polymer is polydopamine (PDA), preferably obtained from free base dopamine.

8. A method according to any of the preceding claims, wherein said hydrophobic compound is chosen among hydrophobic molecules which have alkyl and/or fluorinated groups and include at least one other functionality.

9. A method according to claim 8 wherein said hydrophobic molecules comprise alkanes or fluoroalkanes and wherein said at least one other functionality is chosen among -COOH, -OH, -SH, -SO₃H, -PO₃H₂, and/or -NH₂ functionalities, even more preferably -SH.

10. A method according to claim 8, wherein said hydrophobic compound is chosen among the following molecules: 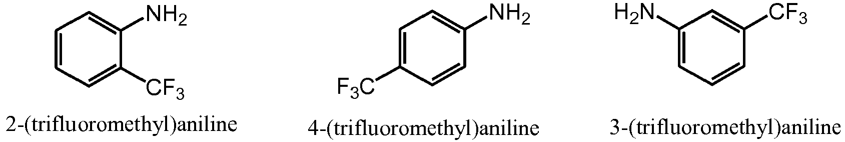 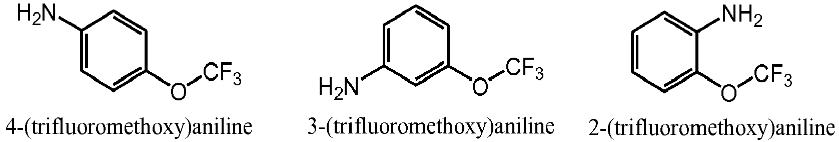 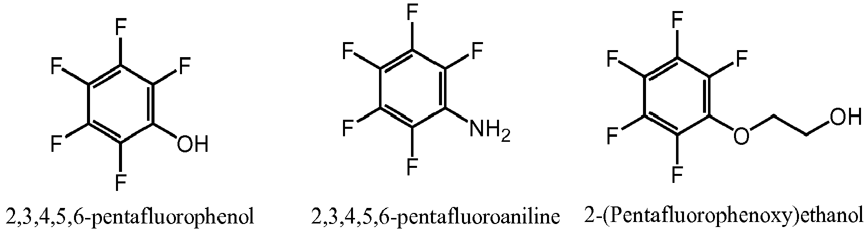 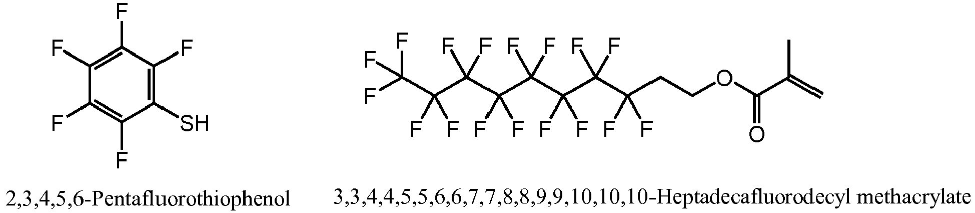 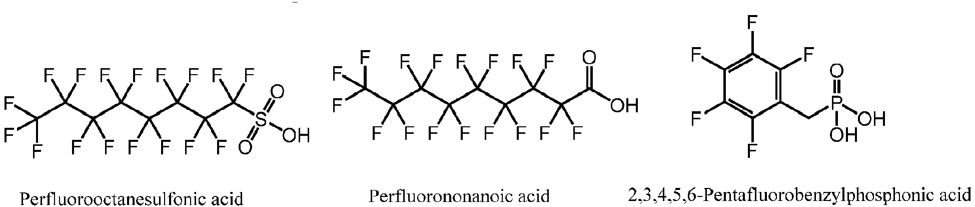 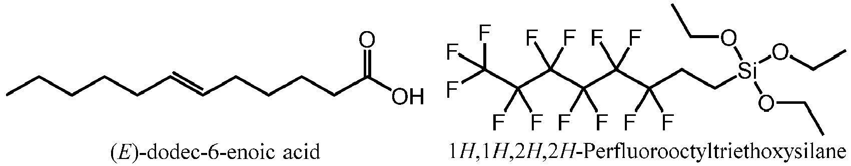 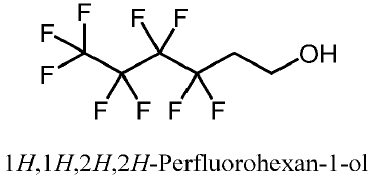 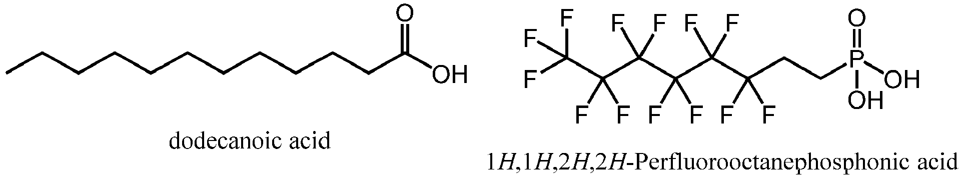 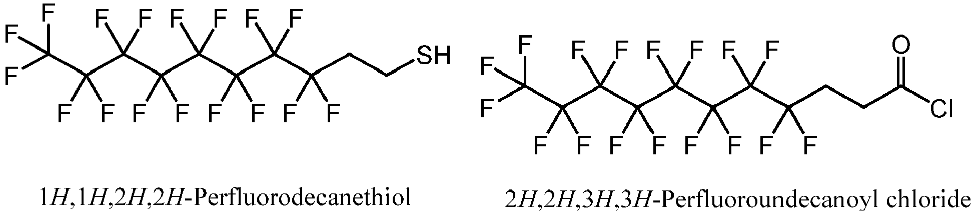 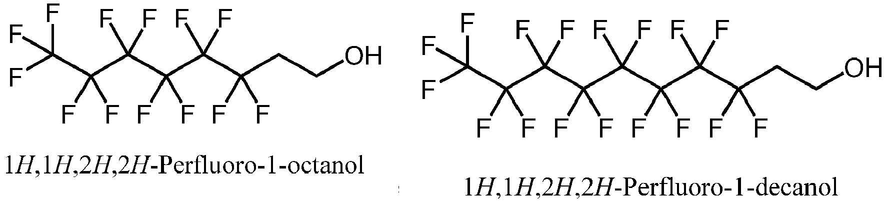 and is preferably 1H,1H,2H,2H-perfluorodecanethiol (HSF).

11. A method according to any of the preceding claims wherein said metal organic framework is chosen among HKUST-1 (Cu₃(BTC)₂, BTC³⁻= benzene-1,3,5-tricarboxylate), ZIF-8 (Zn(MIm)₂, Mlm=2-methylimidazolate), ZIF-67 (Co(MIm)₂, Mlm=2-methylimidazolate), ZIF-69 (Zn(cblm)(nlm), cblm= 5-chlorobenzimidazole, nIm=2-nitroimidazole), Mg-MOF-74 (Mg₂(dobdc), dobdc⁴⁻ = 2,5-dioxido-1,4-benzenedicarboxylate), UiO-66 (Zr₆O₄(OH)₄(BDC)₆, BDC²⁻= 1,4-dicarboxybenzene), MIL-100-Fe *(or* Fe₃(BTC)₂, BTC³⁻= benzene-1,3,5-tricarboxylate), Cu-TDPAT (TDPAT=2,4,6-tris(3,5-dicarboxylphenylamino)-1,3,5-triazine), or any chemical derivative of the aforementioned frameworks.

12. A method according to any of the preceding claims wherein step b) comprises the following steps:
i. Disperse the metal organic framework in a polar solvent;
ii. Add the appropriate monomers to the solution and stir in the presence of an oxidizing agent in order to make said polymer grow on said metal organic framework ; and
iii. separate the obtained solid product from the solution.

13. A method according to any of the preceding claims wherein step c) comprises the following steps :
i. Disperse the product obtained from step b) in a solvent;
ii. Add said hydrophobic compound and stir, if necessary in the presence of an appropriate acid or base; and
iii. Recover the obtained composite and wash it with a solvent.

14. A metal organic framework composite, obtainable by the method according to any of claims 1 to 13.

15. Use of a metal organic framework composite according to claim 14 for catalysis, selective gas separation, drug delivery or separation of harmful contaminates such as metals and organic compounds from water, preferably for separation of harmful organics from water.
